# EUROPÄISCHE PATENTANMELDUNG

(11) **EP 1 333 517 A2**
(43) Veröffentlichungstag der Anmeldung: **06.08.2003**
(21) Anmeldenummer: 03010499.6
(22) Anmeldetag: 10.05.2000
(51) Int. Cl.: H01M 8/02, H01M 8/04, H01M 8/24

(54) **Brennstoffzellenvorrichtung und System mir derartiger Brennstoffzellenvorrichtung**

(30) Priorität: 11.05.1999 DE 19921816
(62) Teilanmeldung aus: 00935003.4
(71) Anmelder: SFC Smart Fuel Cell AG, 85649 Brunnthal-Nord (DE)
(72) Erfinder: Stefener, Manfred, 80799 München (DE); Peine, André, 81369 München (DE); Stimming, Ulrich, Prof. Dr., 81479 München (DE)
(74) Vertreter: Grünecker, Kinkeldey, Stockmair & Schwanhäusser Anwaltssozietät

(57) **Zusammenfassung**

Die Erfindung betrifft eine Brennstoffzellenvorrichtung, umfassend wenigstens eine Brennstoffzelleneinrichtung mit einer Mehrzahl von Anodeneinrichtungen, und einer Mehrzahl von Kathodeneinrichtungen, wobei jeder Kathodeneinrichtung eine entsprechende Anodeneinrichtung zugeordnet ist. Die erfindungsgemäße Brennstoffzellenvorrichtung zeichnet sich dadurch aus, daß jede Brennstoffzelleneinrichtung eine im wesentlichen flächige Elektrolyteinrichtung aufweist, wobei jede Anodeneinrichtung und die ihr entsprechende Kathodeneinrichtung auf einander gegenüberliegenden Seiten der Elektrolyteinrichtung angeordnet sind. Erfindungsgemäß wird außerdem eine Brennstoffzellenvorrichtung geschaffen mit wenigstens zwei Brennstoffzelleneinrichtung mit einer Mehrzahl von Anodeneinrichtungen, einer Mehrzahl von Kathodeneinrichtungen, wobei jeder Kathodeneinrichtung eine entsprechende Anodeneinrichtung zugeordnet ist, und einer Mehrzahl von Elektrolyteinrichtungen, in welcher jeweils eine Anodeneinrichtung und eine entsprechende Kathodeneinrichtung auf einander gegenüberliegenden Seiten einer entsprechenden Elektrolyteinrichtung angeordnet sind und zusammen eine Einzelzelle bilden, und alle Einzelzellen einer Brennstoffzelleneinrichtung in einer Ebene angeordnet sind. Vorteilhafterweise umfaßt eine derartige Brennstoffzellenvorrichtung wenigstens zwei Brennstoffzelleneinrichtungen, wobei jeweils zwei zueinander benachbarte Brennstoffzelleneinrichtungen durch eine Verbindungsvorrichtung miteinander verbunden sind und jede Verbindungsvorrichtung Zuführkanäle für den den Anodeneinrichtungen zuzuführenden Brennstoff bzw. das den Kathodeneinrichtungen zuzuführende Oxidationsmittel aufweist. Alternativ umfaßt eine derartige Brennstoffzelleneinrichtung wenigstens zwei Brennstoffzelleneinrichtungen, wobei jeweils zwei zueinander benachbarte Brennstoffzelleneinrichtungen durch eine Verbindungsvorrichtung miteinander verbunden sind, und jede Verbindungsvorrichtung erste Zuführkanäle für den den Anodeneinrichtungen zuzuführenden Brennstoff und zweite Zuführkanäle für das den Kathodeneinrichtungen zuzuführende Oxidationsmittel aufweist. Die Erfindung betrifft ferner ein System zur Versorgung eines Verbrauchers mit elektrischer Energie, welches eine erfindungsgemäße Brennstoffzellenvorrichtung umfaßt.

## Beschreibung

### Gebiet der Erfindung

Die Erfindung betrifft ein System zur Versorgung eines Verbrauchers mit elektrischer Energie mit einer Brennstoffzellenvorrichtung zur Erzeugung der elektrischen Energie, und einer Brennstoffbehältervorrichtung zur Aufnahme von der Brennstoffzellenvorrichtung zuführbarem Brennstoff.

Weiterhin betrifft die Erfindung Brennstoffzellen für ein derartiges System, insbesondere eine Brennstoffzellenvorrichtung umfassend wenigstens eine Brennstoffzelleneinrichtung mit einer Mehrzahl von Anodeneinrichtungen, und einer Mehrzahl von Kathodeneinrichtungen, wobei jeder Kathodeneinrichtung eine entsprechende Anodeneinrichtung zugeordnet ist.

Darüber hinaus betrifft die Erfindung Stapel derartiger Brennstoffzellen (im folgenden auch Brennstoffzellenstacks).

### Stand der Technik

Systeme mit Brennstoffzellen der oben beschriebenen Art sowie Brennstoffzellen der oben beschriebenen Art für derartige Systeme sind im Stand der Technik bekannt.

Die bekannten Brennstoffzellen-Systeme beschränken sich im wesentlichen auf den Hochleistungsanwendungsbereich von mehreren kW. So findet man Brennstoffzellen-Systeme beispielsweise in der Automobilindustrie oder in der Kraftwerkstechnik.

Im Kleinleistungsbereich, d.h. der Größenordnung von bis zu 1 bis 2 kW, werden Brennstoffzellen als Alternative zu Batterien oder Akkus heutzutage noch kaum verwendet. Dies liegt daran, daß bekannte Brennstoffzellen-Systeme, die als Batterie und Akkuersatz dienen sollen, schlechtere Eigenschaften als Batterien und Akkus aufweisen. Insbesondere können bekannte Brennstoffzellen-Systeme nicht die gleiche Laufzeit, die gleiche Sicherheit, eine vergleichbare Größe und ein vergleichbares Gewicht wie Batterien oder Akkus gewährleisten.

Darüber hinaus sind bei bekannten Systemen keine Maßnahmen vorgesehen, die eine Entsorgung der Reaktionsprodukte gewährleisten.

Während mit einer Brennstoffzelle Stromstärken von deutlich über 1A/cm² erzielt werden können, lassen sich mit einer einzelnen Brennstoffzelle in der Regel nur elektrische Spannungen im Bereich von 0.5 bis 0.7V im belasteten Zustand (1.2V im unbelasteten Zustand) erreichen. Da die meisten Kleingeräte jedoch eine wesentlich höhere Betriebsspannung erfordern, ist es notwendig mehrere Brennstoffzellen zu einer Brennstoffzellenvorrichtung zusammenzuschließen, um die erforderliche Spannung zur Verfügung stellen zu können.

Es ist bekannt mehrere Brennstoffzellen zu einer stapelförmigen Brennstoffzellenvorrichtung (Brennstoffzellenstack) zusammenzufassen. Die bekannten Brennstoffzellenstacks haben allerdings große Bauhöhen und komplexe Brennstoffzuführvorrichtungen, die einer Verwendung in Kleingeräten in der Regel entgegenstehen.

Außerdem ist es bekannt mehrere Brennstoffzellen in einer Ebene anzuordnen und miteinander zu verschalten. Beispielsweise offenbart die DE 196 36 903 eine derartige flächenförmige Anordnung. Die in dieser Druckschrift gezeigte Anordnung umfaßt eine Mehrzahl von Einzelzellen, die jeweils gasdicht in einem Gehäuse vorgesehen sind. Da bei einer Herstellung einer derartigen Brennstoffzelle die Mehrzahl der einzelnen Brennstoffzellen und die in ihrer Anzahl entsprechenden Mehrzahl der Dichtungen in dem Gehäuse positioniert werden müssen, ist die Herstellung einer derartigen Brennstoffzellenvorrichtung verhältnismäßig aufwendig und damit kostenintensiv.

Angesicht dieser Nachteile des Standes der Technik liegt der Erfindung die Aufgabe zugrunde, die bekannten Brennstoffzellen-System sowie die darin verwendeten Brennstoffzellenvorrichtungen zu verbessern.

### Beschreibung der Erfindung

Die zuvor genannte Aufgabe wird gelöst durch ein System zur Versorgung eines Verbrauchers mit elektrischer Energie der eingangs genannten Art, das sich auszeichnet durch eine Entsorgungsvorrichtung zur Entsorgung der durch den Betrieb der Brennstoffzellenvorrichtung entstehenden Abfallprodukte.

Durch Vorsehen einer Entsorgungsvorrichtung für die Abfallprodukte der in einer Brennstoffzelle ablaufenden Prozesse kann die Brennstoffseite des Systems völlig entkoppelt von der Umwelt betrieben werden, wodurch ein sehr großer Nachteil der bekannten Systeme überwunden wird.

Gemäß einer bevorzugten Weiterentwicklung kann die Entsorgungsvorrichtung hierbei eine Aufnahmeeinrichtung zur Aufnahme der Abfallprodukte umfassen.

Entsprechend einer anderen vorteilhaften Weiterbildung kann die Brennstoffbehältervorrichtung so ausgebildet sein, daß sie als Aufnahmeeinrichtung dient. Durch diese Maßnahme kann die Baugröße des Systems verringert werden, was insbesondere den Einbau in Kleingeräte, wie beispielsweise tragbare Computer, elektrische Werkzeuge, elektrisch Haushaltsgeräte, elektrische Telekommunikationseinrichtungen, tragbare Fernseher, Videorecorder und dergleichen, ermöglicht.

Gemäß einer anderen bevorzugten Weiterbildung kann die Entsorgungseinrichtung eine Filtereinrichtung aufweisen. Durch diese Maßnahme ist es möglich, die Abfallprodukte voneinander zu trennen. Dies erleichtert die Entsorgung der bei der Energieerzeugung entstehenden Elemente. Durch eine derartige Trennung kann außerdem ein den Brennstoff nicht beeinträchtigender Teil der Abfallprodukte in der Brennstoffbehältervorrichtung gespeichert werden. Dies ist im übrigen eines der Beispiele für die bereits oben beschriebene Weiterbildung der Brennstoffbehältervorrichtung, die auch als Aufnahmeeinrichtung dient.

Entsprechend einer alternativen Weiterbildung kann die Entsorgungsvorrichtung auch eine lonentauschereinrichtung umfassen.

Vorteilhafterweise können sowohl d ie F iltereinrichtung als a uch d ie Ionentauschereinrichtung zur Umwandlung von beim Betrieb der Brennstoffzellenvorrichtung entstehender Gase in flüssige und/oder feste Stoffe ausgebildet sein. Durch diese Maßnahme verbleiben nach der Energieerzeugung nur flüssige und feste Abfallprodukte, die wesentlich einfacher als gasförmige Abfallprodukte zu handhaben sind.

In dem System muß sichergestellt werden, daß der Brennstoffzellenvorrichtung immer Brennstoff in ausreichender Konzentration zur Verfügung steht. Hierzu muß der Brennstoff in Kontakt mit der Elektrodenanordnung, bei Durchtritt von positiven Ionen durch den Elektrolyten der Anodenanordnung und bei Durchtritt von negativen Ionen durch den Elektrolyten der Kathodenanordnung der Brennstoffzellenvorrichtung, stehen.

Entsprechend einer vorteilhaften Weiterbildung der zuvor beschriebenen Systeme kann eine Pumpvorrichtung zur Unterstützung der Brennstoffzufuhr aus der Brennstoffbehältervorrichtung in die Brennstoffzellenvorrichtung vorgesehen werden. Durch eine derartige Pumpvorrichtung kann insbesondere bei Flüssigkeiten der Fluß unterstützt werden, der sicherstellt, daß der Brennstoffzelle immer unverbrauchter Brennstoff zur Verfügung steht. Darüber hinaus unterstützt dieser Fluß auch das Abführen der Abfallprodukte.

Gemäß einer anderen Weiterbildung kann das System auch so ausgebildet sein, daß die Brennstoffzufuhr im wesentlichen durch die Pumpvorrichtung bewirkt wird. Hierbei kann durch gezielte Steuerung der Pumpvorrichtung die Energieversorgung gesteuert werden.

Vorteilhafterweise kann die Pumpvorrichtung in den beschriebenen Weiterbildungen in Form einer Miniaturpumpe ausgebildet sein. Durch diese Maßnahme kann die Baugröße des Systems klein gehalten werden.

Entsprechend einer besonders vorteilhaften Weiterbildung kann die Pumpvorrichtung derart regelbar a usgebildet s ein, d aß d ie d er B rennstoffzellenvorrichtung zugeführte B rennstoffmenge eine konstante Ausgangsleistung der Brennstoffzellenvorrichtung bewirkt. Hierbei dienen wiederholte Messungen der Ausgangsleistung der Brennstoffzellenvorrichtung als Regelgröße.

Vorteil dieser Weiterbildung ist es, daß eine Energieversorgung eines Verbrauchers mit konstantem Strom und konstanter Spannung, also mit konstanter Leistung, möglich ist.

Entsprechend einer anderen Weiterbildung können die zuvor beschriebenen Brennstoffzellenvorrichtungen vorteilhafterweise als Methanol-Brennstoffzellenvorrichtung vorgesehen werden. Methanol-Brennstoffzellenvorrichtungen zeichnen sich insbesondere dadurch aus, daß ein flüssiger Brennstoff mit hoher Energiedichte verwendet wird, was zu einer kompakten Bauweise einer Methanol-Brennstoffzellenvorrichtung führt. In Methanol-Brennstoffzellen wird insbesondere ein Methanol-Wasser-Gemisch als Brennstoff der Anodeneinrichtung der Brennstoffzelle zugeführt. Der Kathodeneinrichtung wird ein Oxidans, beispielsweise Luft oder reiner Sauerstoff zugeführt. Als Abfallprodukte der Reaktionen in der Brennstoffzelle entstehen Kohlendioxid an der Anode und Wasserdampf an der Kathode.

Gemäß einer vorteilhaften Weiterbildung der Methanol-Brennstoffzellenvorrichtung kann eine Filtereinrichtung verwendet werden, die Kohlendioxid in ein in fester Phase vorliegendes Carbonat umwandelt. Insbesondere eignen sich hierzu Filtereinrichtungen, die Calziumcarbonat aufweisen.

Alternativ kann eine derartige Umwandlung vorteilhafterweise mit einem alkalischen lonentauscher, insbesondere einem alkalischen lonentauscher auf Kunstharzbasis, beispielsweise einem Hydroxidionentauscher, durchgeführt werden.

Alternativ zur Methanol-Brennstoffzellenvorrichtung lassen sich auch Wasserstoff-Brennstoffzellenvorrichtungen einsetzen. In diesem Fall wird Wasserstoff als Brennstoff verwendet und demnach der Anodeneinrichtung zugeführt. Der Kathodeneinrichtung wird ebenfalls ein Oxidans, beispielsweise Sauerstoff oder Luft, zugeführt. Als Reaktionsprodukte entsteht an d er Kathode in Dampfform vorliegendes Wasser. Dieses kann in einer A ufnahmeeinrichtung gesammelt. Alternativ kann es auch an die Umgebung abgegeben werden. Weiterhin muß in dieser Ausführung die verbleibende sauerstoffarme Luft aus dem System geführt werden. Dies kann durch Abgabe an die Umgebung geschehen.

Gemäß einer anderen bevorzugten Weiterbildung der zuvor beschriebenen Systeme kann die Brennstoffbehältervorrichtung zur Aufnahme von Methanol-Wasser-Gemisch bzw. Wasserstoff ausgebildet sein, und eine Oxidationsmittelbehältervorrichtung zur Aufnahme eines Oxidationsmittels, beispielsweise reinem Sauerstoff oder Wasserstoffperoxid, vorgesehen sein. Durch diese Maßnahme kann das Brennstoffzellen-System als vollständig abgeschlossenes System, so wie eine Batterie oder ein Akku, betrieben werden.

Analog zu der Pumpvorrichtung auf der Brennstoffseite kann auch eine Pumpvorrichtung zur Unterstützung der Oxidationsmittelzufuhr aus der Oxidationsmittelbehältervorrichtung in die Brennstoffzellenvorrichtung vorgesehen werden.

Gemäß einer anderen Weiterbildung kann die Oxidationsmittelzufuhr vorteilhafterweise im wesentlichen durch die Pumpvorrichtung bewirkt werden. Wie im Fall der Pumpvorrichtung für den Brennstoff kann hierdurch eine gezielte Oxidationsmittelzufuhr zur Elektrodeneinrichtung der Brennstoffzellenvorrichtung gewährleistet werden.

Vorteilhafterweise kann die Pumpvorrichtung in Form einer Miniaturpumpe ausgebildet sein. Hierdurch ist wiederum eine kleine Baugröße bei hoher Funktionalität sichergestellt.

Ebenso wie die brennstoffseitige Pumpvorrichtung kann auch die oxidationsmittelseitige Pumpvorrichtung derart regelbar vorgesehen werden, daß die von der Pumpvorrichtung der Brennstoffzellenvorrichtung zugeführte Oxidationsmittelmenge eine konstante Ausgangsleistung der Brennstoffzellenvorrichtung sicherstellt, wobei die Ausgangsleistung der Brennstoffzellenvorrichtung als Regelgröße dient. Diese Ausführung kann alternativ zur oder zusammen mit der Regelung der brennstoffseitigen Pumpvorrichtung implementiert werden.

Die oben beschriebenen Systeme können entsprechend einer anderen Weiterbildung eine Ventilatoreinrichtung zur Zufuhr von Luftsauerstoff aus der Umgebung umfassen. Vorteil dieser Ausbildung ist es, daß die Umgebungsluft als Oxidationsmittel verwendet werden kann. Vorteilhaft ist weiterhin, daß die Größe des System wegen des Wegfalls der Oxidationsmittelbehältervorrichtung kleiner ausgebildet werden kann. Insgesamt kann so das System kleiner und kostengünstiger hergestellt werden. Da Luftsauerstoff verwendet wird, ist die Effizienz des Systems gegenüber einem mit reinem Sauerstoff betriebenen System allerdings verringert. Die überschüssige sauerstoffarme Luft kann in dieser Weiterbildung an die Umgebung abgegeben werden.

Entsprechend einer vorteilhaften Weiterbildung aller zuvor beschriebenen Systeme kann das gesamte System, also die Brennstoffzellenvorrichtung, die Brennstoffbehältervorrichtung, gegebenenfalls die Pumpvorrichtung für den Brennstoff und/oder für das Oxidationsmittel, gegebenenfalls die Behältervorrichtung zur Aufnahme des Oxidationsmittels und die Entsorgungsvorrichtung als Modul ausgebildet sein, das in den Verbraucher zur Energieversorgung einsetzbar und aus dem Verbraucher zum Wiederauffüllen entfernbar ist. Diese Ausbildung ermöglicht ein einfaches Wiederauffüllen der Betriebsstoffe und ein einfaches Ersetzen des Systems, wenn es verschlissen ist.

Alternativ und gemäß einer anderen höchst vorteilhaften Weiterbildung können die Brennstoffzellenvorrichtung und gegebenenfalls die Pumpvorrichtung für den Brennstoff und/oder für das Oxidationsmittel des Systems verbraucherseitig angeordnet sein. In diesem Fall sind lediglich die Brennstoffbehältervorrichtung, gegebenenfalls die Behältervorrichtung zur Aufnahme des Oxidationsmittels und die Entsorgungsvorrichtung als Modul ausgebildet, das in den Verbraucher zur Energieversorgung einsetzbar und aus dem Verbraucher zum Wiederauffüllen entfernbar ist. In dieser Weiterbildung sind nur die eigentlichen Verbrauchskomponenten des Systems austauschbar.

Ein Vorteil dieses Systems ist es, daß es nach Verbrauch des Brennstoffs wieder aufgefüllt werden kann, ohne daß hierbei problematisch zu entsorgende Stoffe entstehen. Selbst wenn das System als solches entsorgt werden muß, können die einzelnen Komponenten des System recycelt werden, ohne daß hierbei problematisch zu entsorgende Stoffe entstehen, wie dies beispielsweise beim Recyling mancher Batterietypen oder mancher Akkutypen der Fall ist.

Die der Erfindung zugrunde liegende Aufgabe wird auch durch ein System der eingangs genannten A rt g elöst, d as s ich d adurch a uszeichnet, d aß d ie B rennstoffzellenvorrichtung verbraucherseitig vorgesehen ist und die Brennstoffbehältervorrichtung als Modul ausgebildet ist, das in den Verbraucher zur Energieversorgung einsetzbar und aus dem Verbraucher entfernbar ist.

Durch diese Maßnahme können die eigentlichen Verbrauchskomponenten des Systems austauschbar vorgesehen werden. Da einzelne Module relativ kostengünstig hergestellt werden können, kann mit diesen Modulen ein Verbraucher so wie mit Batterien oder mit einem Akku betrieben werden, d.h. wenn der Brennstoff verbraucht ist, kann ein frisches Modul eingesetzt werden. Darüber hinaus kann, da die Speicherkapazität einer Brennstoffzellenvorrichtung bezogen auf ihr Volumen erheblich höher als die einer Batterie oder eines Akkus ist, die Betriebsdauer der Brennstoffzellenvorrichtung bei gleicher Größe erhöht werden.

Dieses System kann auf vielfältige Weise vorteilhaft weitergebildet werden. Insbesondere lassen sich die vorteilhaften Ausführungen einsetzen, die bereits im Zusammenhang mit dem System, das eine Entsorgungsvorrichtung umfaßt, diskutiert worden sind. Im folgenden werden diese vorteilhaften Weiterbildungen lediglich aufgezählt; in bezug auf die durch diese Weiterbildungen erzielbaren Vorteile wird zur Vermeidung von Wiederholungen auf obige Diskussion der vorteilhaften Ausführungen verwiesen.

Gemäß einer Weiterbildung kann das System mit einer verbraucherseitig vorgesehenen Pumpvorrichtung, vorzugsweise einer Miniaturpumpe, zur Unterstützung der Brennstoffzufuhr aus der Brennstoffbehältervorrichtung in die Brennstoffzellenvorrichtung ausgestattet sein.

Diese Pumpvorrichtung kann auch so vorgesehen werden, daß die Brennstoffzufuhr im wesentlichen durch die Pumpvorrichtung bewirkt wird.

Entsprechend einer besonders vorteilhaften Weiterbildung kann die Pumpvorrichtung regelbar vorgesehen werden, und zwar so, daß die von der Pumpvorrichtung der Brennstoffzellenvorrichtung zugeführte Brennstoffmenge eine konstante Ausgangsleistung der Brennstoffzellenvorrichtung bewirkt, wobei die gemessene Ausgangsleistung der Brennstoffzellenvorrichtung als Regelgröße dient.

Gemäß einer anderen Weiterbildung kann in dem System als Brennstoffzellenvorrichtung eine Wasserstoff-Brennstoffzellenvorrichtung eingesetzt werden.

Weiterhin kann das System verbraucherseitig eine Pumpvorrichtung, vorzugsweise eine Miniaturpumpe, zur Unterstützung der Oxidationsmittelzufuhr in die Brennstoffzellenvorrichtung aufweisen.

Entsprechend einer Weiterbildung des Systems kann die Oxidationsmittelzufuhr im wesentlichen durch die Pumpvorrichtung bewirkt werden.

Gemäß einer anderen vorteilhaften Weiterbildung kann die Pumpvorrichtung derart regelbar sein, daß die der Brennstoffzellenvorrichtung zugeführte Oxidationsmittelmenge eine konstante Ausgangsleistung der Brennstoffzellenvorrichtung bewirkt, wobei die Ausgangsleistung der Brennstoffzellenvorrichtung als Regelgröße dient. Die regelbare Pumpvorrichtung für das Oxidationsmittel kann auch hier zusammen mit der regelbaren Pumpvorrichtung für den Brennstoff eingesetzt werden.

Entsprechend einer anderen Weiterbildung kann die Pumpvorrichtung auch in Form einer Ventilatoreinrichtung zur Zufuhr von Luftsauerstoff aus der Umgebung ausgebildet sein.

Der dritte Aspekt der der Erfindung zugrunde liegenden Aufgabe, nämlich die Verbesserung der Brennstoffzellenvorrichtung wird durch eine Brennstoffzellenvorrichtung der eingangs genannten Art gelöst, die sich dadurch auszeichnet, daß jede Brennstoffzelleneinrichtung eine einzige im wesentlichen flächige Elektrolyteinrichtung aufweist, wobei jede Anodeneinrichtung und die ihr entsprechende Kathodeneinrichtung auf einander gegenüberliegenden Seiten der Elektrolyteinrichtung angeordnet sind.

Hierdurch ist es gegenüber dem Stand der Technik nicht mehr erforderlich, jede einzelne Brennstoffzelle aus Anode, Elektrolyt und Kathode gasdicht in einem Gehäuse anzuordnen. Der Herstellungsprozeß und damit die Herstellungskosten der Brennstoffzellenvorrichtung können damit wesentlich vereinfacht bzw. verringert werden.

Alternativ wird eine Verbesserung der b ekannten B rennstoffzellenvorrichtung d adurch e r-reicht, daß wenigstens zwei Brennstoffzelleneinrichtungen mit einer Mehrzahl von Anodeneinrichtungen, einer Mehrzahl von Kathodeneinrichtungen, wobei jeder Kathodeneinrichtung eine entsprechende Anodeneinrichtung zugeordnet ist, und einer Mehrzahl von Elektrolyteinrichtungen vorgesehen werden, wobei jeweils eine Anodeneinrichtung und eine entsprechende Kathodeneinrichtung auf einander gegenüberliegenden Seiten einer entsprechenden Elektrolyteinrichtung angeordnet sind und zusammen eine Einzelzelle bilden, alle Einzelzellen einer Brennstoffzelleneinrichtung in einer Ebene angeordnet sind, und die wenigstens zwei Brennstoffzelleneinrichtungen übereinander angeordnet sind.

Hierdurch kann insbesondere die mit der bekannten Brennstoffzellenvorrichtung erzielbare Spannung unter Optimierung der Dimensionierung, d.h. Reduktion der Größe, der Brennstoffzellenvorrichtung als solches erhöht werden.

Entsprechend einer vorteilhaften Weiterbildung dieser Alternativen können jeweils einander entsprechende Anodeneinrichtungen und Kathodeneinrichtungen dieselbe Größe und dieselbe Form aufweisen. Hierdurch wird eine effektive Energieerzeugung bei minimaler Baugröße gewährleistet.

Gemäß einer anderen vorteilhaften Weiterbildung der zuvor beschriebenen Brennstoffzellenvorrichtungen können zwischen der (den) Elektrolyteinrichtung(en) und den Anodeneinrichtungen und/oder zwischen der (den) Elektrolyteinrichtung(en) und den Kathodeneinrichtungen ionendurchlässige, vorzugsweise protonendurchlässige, Stromableiter vorgesehen sein, die durch eine Verschaltungseinrichtung miteinander verschaltet sind.

Alternativ hierzu können auch brennstoffdurchlässige bzw. oxidationsmitteldurchlässige Stromableiter verwendet werden, die auf den Anodeneinrichtungen und/oder den Kathodeneinrichtungen vorgesehen sind, wobei die Stromableiter durch eine Verschaltungseinrichtung miteinander verschaltet sind.

Gemäß einer weiteren Alternative können in den Anodeneinrichtungen und/oder in den Kathodeneinrichtungen brennstoffdurchlässige bzw. oxidationsmitteldurchlässige Stromableiter vorgesehen werden, die durch eine Verschaltungseinrichtung miteinander verschaltet sind.

Die zuvor genannten drei Alternativen zur Anordnung der Stromableiter bezüglich der Anodeneinrichtungen bzw. der Kathodeneinrichtungen können jeweils einzeln eingesetzt werden, d.h. für alle Elektroden der Brennstoffzellenvorrichtung, oder auch beliebig miteinander kombiniert werden.

Jeder Stromableiter kann hierbei vorzugsweise in Form eines Geflechts oder eines dünnen Lochblechs bzw. einer Lochfolie ausgebildet sein. Hierdurch ist zum einen ein guter Kontakt zwischen Stromableiter und Elektrode sichergestellt; zum anderen können der Brennstoff und das Oxidationsmittel problemlos mit den Elektrodeneinrichtungen in Kontakt treten.

Vorzugsweise kann hierbei jeder Stromableiter Nickel, Platin, Gold, und/oder Edelstahl umfassen. Durch diese Materialien kann die Haltbarkeit der Stromableiter erheblich erhöht werden.

Entsprechend einer vorteilhaften Weiterbildung des Stromableiters kann dieser ungefähr dieselbe Größe wie die ihm zugeordnete Anodeneinrichtung bzw. die ihm zugeordnete Kathodeneinrichtung haben. In dieser Ausbildung wird der maximal mögliche Kontakt zwischen Stromableiter und Elektrodeneinrichtung gewährleistet und dadurch der Widerstand zwischen Stromableiter und Elektrodeneinrichtung minimiert.

Gemäß einer besonders vorteilhaften Weiterbildung kann die Verschaltungseinrichtung Leiterbahnen umfassen. Durch diese Maßnahme kann eine besonders einfache Verschaltung der einzelnen Brennstoffzellen realisiert werden. Insbesondere läßt sich hierdurch eine integrierte Verschaltung realisieren.

Diese Leiterbahnen können beispielsweise auf der Elektrolyteinrichtung aufgebracht sein.

Insbesondere im Zusammenhang mit Stromableitern, die ebenfalls auf der Elektrolyteinrichtung aufgebracht sind (bzw. zwischen Elektrolyeineinrichtung und Anoden- bzw. Kathodeneinrichtung), ergibt sich der Vorteil einer relativ einfachen Herstellung. So kann in einem Arbeitsschritt das gesamte Stromableiter/Leiterbahnmuster auf der Elektrolyteinrichtung, beispielsweise mit aus der Halbleitertechnologie bekannten Verfahren, wie Maskieren, Photolithographie, Ätzen, Beschichten und dergleichen, ausgebildet werden.

Entsprechend einer vorteilhaften Weiterbildung kann die Verschaltungseinrichtung eine Leiterbahn für wenigstens eine Anodeneinrichtung und eine Leiterbahn für wenigstens eine Kathodeneinrichtung aufweisen, wobei die Leiterbahnen am Rand der Elektrolyteinrichtung mit einer Verbindungseinrichtung verbunden sind.

Außerdem kann die Verschaltungseinrichtung für wenigstens eine Anodeneinrichtung und wenigstens eine Kathodeneinrichtung eine Leiterbahn umfassen, die von der Anodenseite zur Kathodenseite durch die Elektrolyteinrichtung geführt ist. So kann eine Schaltung der einzelnen Zellen in Reihe realisiert werden.

Durch eine beliebige Kombination dieser beiden Alternativen lassen sich beliebige Verschaltungen der einzelnen Brennstoffzellen realisieren. Beispielsweise können durch die zweite Alternative alle Brennstoffzellen miteinander in Reihe geschaltet werden und der Abgriff, also die Leiterbahn, die am Rand der Elektrolyteinrichtung mit der Verbindungseinrichtung verbunden ist, kann an der ersten und der letzten Brennstoffzelle dieser Reihe vorgesehen werden. Andererseits kann durch die erste Alternative auch jede Brennstoffzelle für sich abgegriffen werden und extern auf beliebige Weise verschaltet werden. Diese beiden Alternativen sowie eine Kombination beider Alternativen ermöglichen hiermit eine Vielzahl von Möglichkeiten, eine Brennstoffzellenvorrichtung an die verschiedenen Strom- und Spannungserfordernisse eines Verbrauchers anzupassen.

Gemäß einer vorteilhaften Weiterbildung kann eine Schaltvorrichtung, die zum Verändern der Verschaltungseinrichtung der Anodeneinrichtungen und der Kathodeneinrichtungen der wenigstens einen bzw. der wenigstens zwei Brennstoffzelleneinrichtungen ausgebildet ist, vorgesehen werden. Hierdurch ist zum einen eine optimale Anpassung der durch die Brennstoffzellenvorrichtung erzeugten elektrischen Energie an die Erfordernisse eines Verbrauchers möglich. Außerdem kann diese Anpassung auch auf einfache Weise verändert werden und so den Erfordernissen eines bzw. verschiedener Verbraucher angepaßt werden.

Vorteilhafterweise kann die Schaltvorrichtung der Brennstoffzellenvorrichtung eine Verbindungseinrichtung umfassen, die mit der Verbindungseinrichtung am Rand der Elektrolyteinrichtung verbindbar ist. Diese Verbindungseinrichtung kann beispielsweise eine Steckleiste umfassen.

Gemäß einer Weiterbildung der zuvor genannten Brennstoffzellenvorrichtungen kann die Elektrolyteinrichtung in Form einer protonenleitenden Elektrolytfolie vorgesehen sein. Eine derartige Folie kann verhältnismäßig leicht bearbeitet und verarbeitet werden, was die Herstellungskosten der Brennstoffzellenvorrichtung niedrig hält.

Die Brennstoffzellenvorrichtung kann entsprechend einer vorteilhaften Weiterbildung Methanol-Brennstoffzelleneinrichtungen umfassen. In diesem Fall eignet sich vorzugsweise eine Elektrolyteinrichtung, die Nafion umfaßt.

Die bereits im Zusammenhang mit den Weiterbildungen der Systeme diskutierten Vorteile einer Methanol-Brennstoffzellenvorrichtung gelten hier ebenfalls.

Gemäß einer alternativen Weiterbildung kann die Brennstoffzellenvorrichtung auch Wasserstoff-Brennstoffzelleneinrichtungen aufweisen; auch in diesem Fall eignen sich ebenfalls Elektrolyteinrichtungen, die Nafion umfassen.

Auch hier gelten die bereits im Zusammenhang mit den Weiterbildungen der Systeme diskutierten Vorteile einer Wasserstoff-Brennstoffzellenvorrichtung.

Die zuvor beschriebenen Brennstoffzellenvorrichtungen lassen sich vorzugsweise durch halbleitertechnologische Verfahren, galvanische Verfahren oder andere bekannte Oberflächenbeschichtungsverfahren herstellen.

Entsprechend einer besonders vorteilhaften Weiterbildung aller zuvor beschriebenen Brennstoffzellenvorrichtungen können diese wenigstens zwei Brennstoffzelleneinrichtungen aufweisen, wobei jeweils zwei zueinander benachbarte Brennstoffzelleneinrichtungen durch eine elektrisch isolierende Verbindungsvorrichtung miteinander verbunden sind, und die jeweils zwei zueinander benachbarten Brennstoffzelleneinrichtungen so angeordnet sind, daß die Anodeneinrichtungen der ersten dieser Brennstoffzelleneinrichtungen den Anodeneinrichtungen der zweiten dieser Brennstoffzelleneinrichtungen zugewandt sind oder die Kathodeneinrichtungen d er ersten d ieser B rennstoffzelleneinrichtungen d en K athodeneinrichtungen der zweiten dieser Brennstoffzelleneinrichtungen zugewandt sind, und jede Verbindungsvorrichtung eine Zuführverteilungsstruktur für den den Anodeneinrichtungen zuzuführenden Brennstoff bzw. das den Kathodeneinrichtungen zuzuführende Oxidationsmittel aufweist.

Auf diese Weise lassen sich n Brennstoffzelleneinrichtungen zusammenschalten. Hierzu sind n - 1 der oben bezeichneten Verbindungsvorrichtungen erforderlich. Für die erste und die letzte Brennstoffzelleneinrichtung können Elemente vorgesehen werden, die Zuführkanäle aufweisen, die nur auf einer Seite des Elements offen sind. Alternativ lassen sich auf die oben beschriebenen Verbindungsvorrichtungen einsetzen, wobei die Zuführverteilungsstruktur auf einer Seite der Verbindungsvorrichtungen zu verschließen sind, um einen Brennstoff- bzw. Oxidationsmittelaustritt zu vermeiden.

Durch diese Weiterbildung können Brennstoffzelleneinrichtungsstapel gebildet werden und dadurch beliebige, den jeweiligen Erfordernissen entsprechende Spannungen erzeugt werden. Insbesondere können durch diese Weiterbildungen Brennstoffzellenvorrichtungen geschaffen werden, d eren Leistung gegenüber Batterien und Akkus b ei gleicher Spannung beträchtlich gesteigert werden kann. Durch diese sogenannte monopolare Verbindung der einzelnen Brennstoffzelleneinrichtungen können, da für jeweils zwei Zellen nur eine Zuführverteilungsstruktur erforderlich ist, geringe Bauhöhen realisiert werden. Es lassen sich somit Brennstoffzellenvorrichtungen realisieren, deren Größe der herkömmlicher Batterien und Akkus entspricht.

Alternativ hierzu und entsprechend einer anderen Weiterbildung kann die Brennstoffzellenvorrichtung auch eine Stapelform mit wenigstens zwei Brennstoffzelleneinrichtungen aufweisen, in welcher jeweils zwei zueinander benachbarte Brennstoffzelleneinrichtungen durch eine elektrisch isolierende Verbindungsvorrichtung miteinander verbunden sind, wobei jeweils die Kathodenseite einer ersten der zwei Brennstoffzelleneinrichtungen der Anodeneinrichtung der zweiten der zwei Brennstoffzelleneinrichtungen zugewandt ist, und jede Verbindungsvorrichtung eine erste Zuführverteilungsstruktur für den den Anodeneinrichtungen zuzuführenden Brennstoff und eine zweite Zuführverteilungsstruktur für das den Kathodeneinrichtungen zuzuführende Oxidationsmittel aufweist.

Diese Alternative, mit der ebenfalls beliebige Spannung erzeugt werden können, läßt sich insbesondere dann einsetzen, wenn die Bauhöhe weniger kritisch ist. Im übrigen ergeben sich a uch für eine d erartige Weiterbildung m it diesen V erbindungsvorrichtungen die Vorteile, die bereits im Zusammenhang mit der monopolaren Verbindung der Brennstoffzelleneinrichtungen diskutiert worden sind.

Entsprechend einer vorteilhaften Weiterbildung der zuletzt genannten Alternative kann jede Verbindungsvorrichtung leitende Elemente aufweisen, die so angeordnet sind, daß sie jede Anodeneinrichtung einer ersten der zwei zueinander benachbarten Brennstoffzelleneinrichtungen mit der ihr zugewandten und ihr entsprechenden Kathodeneinrichtung der zweiten der zwei zueinander benachbarten Brennstoffzelleneinrichtungen elektrisch leitend verbindet.

Durch diese Weiterbildung ist es möglich, verschiedene, jeweils übereinander liegende Zellen verschiedener Brennstoffzelleneinrichtungen stapelförmig m iteinander zu verschalten. Hierdurch wird in jedem Stapel für übereinanderliegende Brennstoffzellen verschiedenen Brennstoffzelleneinrichtungen eine bipolare Verschaltung realisiert. Die verschiedenen auf diese Weise entstehenden Stapel brauchen nur noch jeweils an der untersten und der obersten Zelle der Stapel miteinander verschaltet werden. Dadurch kann der Verschaltungsaufwand in der Brennstoffzellenvorrichtung verringert werden.

Die zuvor beschriebenen stapelförmigen Brennstoffzellenvorrichtung können, wie auch die Brennstoffzellenvorrichtungen mit nur einer Brennstoffzelleneinrichtung, g emäß einer vorteilhaften Weiterbildung eine Verschaltungseinrichtung in Form von Leiterbahnen aufweisen.

Die Leiterbahnen können hierbei vorteilhafterweise auf oder in der Verbindungsvorrichtung vorgesehen sein. Hierdurch läßt sich die Brennstoffzellenvorrichtung in besonders einfacher Weise herstellen. Insbesondere können zunächst Brennstoffzelleneinrichtungen und die Verbindungsvorrichtungen durch aus der Halbleitertechnologie bekannte Verfahren gebildet werden. Danach ist I ediglich ein Zusammensetzen der Brennstoffzelleneinrichtungen und der Verbindungsvorrichtungen sowie ein Verschalten Brennstoffzelleneinrichtungen erforderlich.

Gemäß einer bevorzugten Weiterbildung kann eine Brennstoffzellenvorrichtung vorgesehen werden, in welcher die Verschaltungseinrichtung eine Leiterbahn für wenigstens eine Anodeneinrichtung und eine Leiterbahn für wenigstens eine Kathodeneinrichtung umfaßt, wobei die Leiterbahnen am Rand der Verbindungsvorrichtung mit einer Verbindungseinrichtung verbunden sind.

Hierdurch ist neben einem Verschalten der einzelnen Brennstoffzellen auch ein beliebiges Verschalten der einzelnen Brennstoffzelleneinrichtungen möglich. Hierdurch können die einzelnen Zellen in verschiedenen Gruppen in verschiedenen Brennstoffzelleneinrichtungen auf beliebige Weise verschaltet werden, wodurch eine Vielzahl von möglichen Strömen und Spannungen erhalten werden können. Derartige Brennstoffzellenvorrichtungen sind daher universell einsetzbar.

Entsprechend einer vorteilhaften Weiterbildung dieser Ausführung können die zuvor beschriebenen Brennstoffzellenvorrichtungen in einem Gehäuse vorgesehen werden, und die Verbindungseinrichtungen können sich durch eine Wand dieses Gehäuses erstrecken. Durch diese Maßnahme kann die gesamte Brennstoffzellenvorrichtung an eine entsprechende Verbindungseinrichtung und/oder Schaltvorrichtung angeschlossen werden.

Für einen Einsatz in Kleingeräten, wie beispielsweise tragbaren Computer und dergleichen, eignen sich insbesondere Niedertemperatur-Brennstoffzellenvorrichtungen.

Die beschriebenen Brennstoffzellenvorrichtungen eignen sich insbesondere zur Abgabe einer Leistung von weniger als ungefähr einem kW.

Die diskutierten Systeme und die darin verwendeten Brennstoffzellenvorrichtungen sind zwar für den Kleinleistungsbereich, insbesondere bezüglich ihrer Leistungsabgabe und Größe, optimiert, lassen sich aber bei entsprechender Dimensionierung auch in anderen Leistungsbereichen einsetzen.

Obwohl nicht explizit erwähnt, sind eine Vielzahl der oben beschriebenen Merkmale miteinander kombinierbar, so daß die für die einzelnen Merkmale beschriebenen Vorteile in Kombination erzielt werden können. Insbesondere eignen sich somit alle beschriebenen Brennstoffzellenvorrichtungen zum Einsatz in den eingangs beschrieben Systemen.

Zur weiteren Erläuterung werden im folgenden bevorzugte Ausführungsformen der vorliegenden Erfindung unter Bezugnahme auf die beigefügte Zeichnung beschrieben. In der Zeichnung zeigen:
- Fig. 1: eine erste Ausführungsform des Systems zur Versorgung eines elektrischen Verbrauchers mit Energie gemäß der vorliegenden Erfindung,
- Fig. 2: eine zweite Ausführungsform des Systems zur Versorgung eines elektrischen Verbrauchers mit Energie gemäß der vorliegenden Erfindung,
- Fig. 3: eine dritte Ausführungsform des Systems zur Versorgung eines elektrischen Verbrauchers mit Energie gemäß der vorliegenden Erfindung,
- Fig. 4: eine vierte Ausführungsform des Systems zur Versorgung eines elektrischen Verbrauchers mit Energie gemäß der vorliegenden Erfindung,
- Fig. 5: eine erste Ausführungsform einer Brennstoffzellenvorrichtung gemäß der vorliegenden Erfindung, insbesondere zur Verwendung in einem der System der Figuren 1 bis 4,
- Fig. 6: eine zweite Ausführungsform einer Brennstoffzellenvorrichtung gemäß der vorliegenden Erfindung, insbesondere zur Verwendung in einem der System der Figuren 1 bis 4,
- Fig. 7: eine dritte Ausführungsform einer Brennstoffzellenvorrichtung gemäß der vorliegenden Erfindung, insbesondere zur Verwendung in einem der System der Figuren 1 bis 4,
- Fig. 8: eine vierte Ausführungsform einer Brennstoffzellenvorrichtung gemäß der vorliegenden Erfindung, insbesondere zur Verwendung in einem der System der Figuren 1 bis 4,
- Fig. 9: eine fünfte Ausführungsform einer Brennstoffzellenvorrichtung gemäß der vorliegenden Erfindung, insbesondere zur Verwendung in einem der System der Figuren 1 bis 4,
- Fig. 10: eine sechste Ausführungsform einer Brennstoffzellenvorrichtung gemäß der vorliegenden Erfindung, insbesondere zur Verwendung in einem der System der Figuren 1 bis 4, und
- Fig. 11: eine Detailansicht eines Stromableiters in einer Brennstoffzellenvorrichtung gemäß der vorliegenden Erfindung.

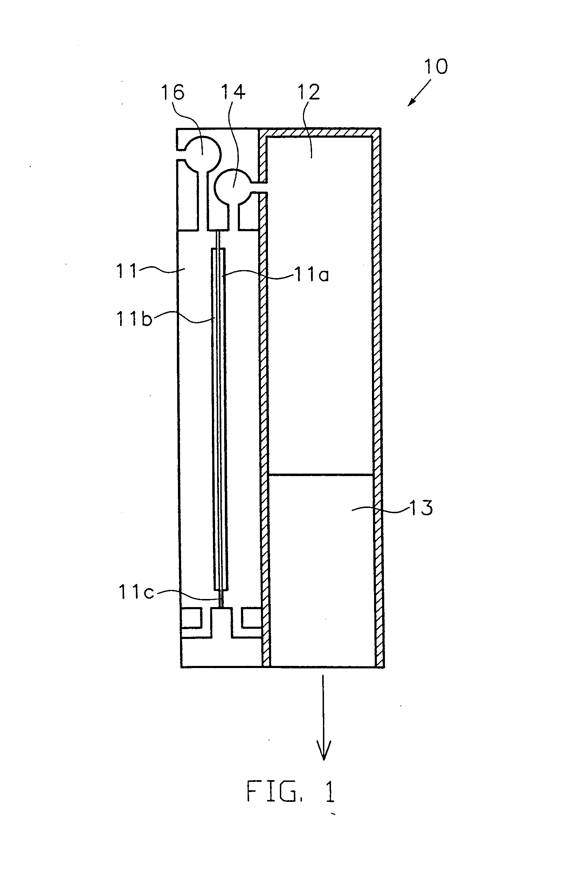

In Figur 1 ist eine erste Ausführungsform eines erfindungsgemäßen Systems 10 zur Versorgung eines elektrischen Verbrauchers mit Energie dargestellt. Die Darstellung des Systems ist, insbesondere in bezug auf die dargestellten Größenverhältnisse, lediglich schematisch zu verstehen.

Das System umfaßt eine Brennstoffzellenvorrichtung 11 zur Erzeugung der elektrischen Energie, eine Brennstoffbehältervorrichtung 12 zur Aufnahme des Brennstoffs und eine Entsorgungsvorrichtung 13 zur Entsorgung der durch den Betrieb der Brennstoffzelle entstehenden Abfallstoffe.

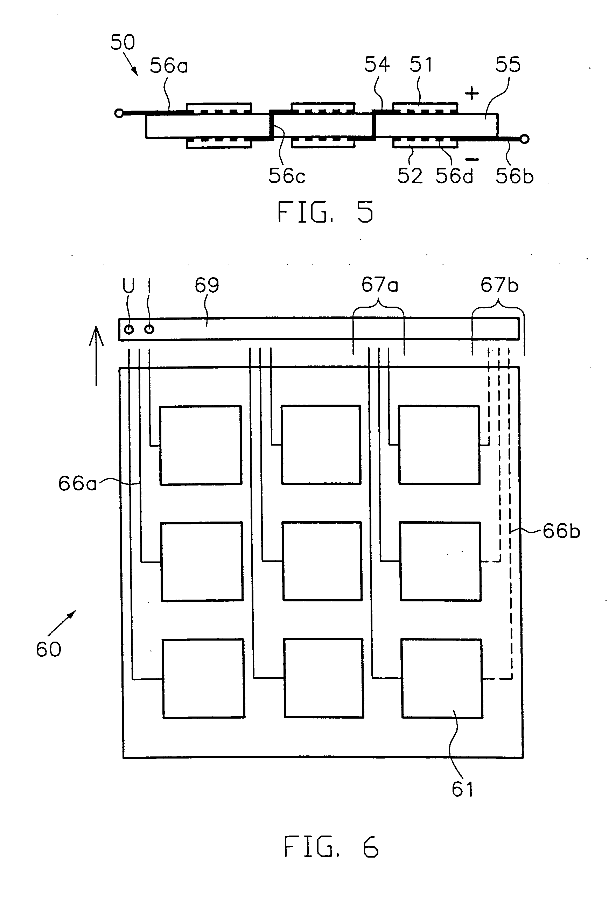

Die Brennstoffzellenvorrichtung 11 umfaßt einen Anodenbereich 11a, eine Elektrolyteinrichtung 11c, die für Ionen, insbesondere Protonen durchlässig und für Elektronen undurchlässig ist, und einen Kathodenbereich 11b. Der Anodenbereich und der Kathodenbereich können insbesondere durch eine Vielzahl von Anoden bzw. Kathoden ausgebildet sein, wie im Zusammenhang mit der Beschreibung der Figuren 5 bis 9 noch im Detail erläutert wird.

In Figur 1 ist ein System 10 dargestellt, in der dem Anodenbereich 11a ein Brennstoff zugeführt wird, der nicht vollständig umgesetzt wird, d.h. nach Umsetzung in Ionen, nicht vollständig durch die Elektrolyteinrichtung 11c in den Kathodenbereich 11b gelangt. Demnach entstehen beim Betrieb d er Brennstoffzelle im Anodenbereich 1 1a Abfallstoffe, die durch die Entsorgungseinrichtung 13, die in der vorliegenden Ausführungsform als Filtereinrichtung ausgebildet ist, entsorgt werden.

Durch eine Pumpvorrichtung 14 wird die Brennstoffzufuhr a us der B rennstoffbehältervorrichtung 12 in die Brennstoffzellenvorrichtung 11 bewirkt.

Dem Kathodenbereich 11b wird in der dargestellten Ausführungsform ein Oxidationsmittel zugeführt. Beim Betrieb der Brennstoffzelle reagiert das Oxidationsmittel mit den Brennstoffkomponenten, die durch die Elektrolyteinrichtung 11c in den Kathodenbereich gelangt sind. Die dargestellte Ausführungsform eignet sich insbesondere, wenn hierbei im Kathodenbereich unschädliche Stoffe entstehen, die ohne Gefahr an die Umgebungsluft abgegeben werden können.

Ein Beispiel für eine Brennstoffzellenvorrichtung der zuvor beschriebenen Art ist eine Methanol-Brennstoffzellenvorrichtung. Als Brennstoff wird hierbei ein Methanol-Wasser-Gemisch verwendet. Als Oxidationsmittel wird dem Kathodenbereich Sauerstoff beispielsweise in Form von Umgebungsluft zugeführt. Hierzu wird ein Ventilator 16, oder alternativ eine Pumpvorrichtung, verwendet.

Bedingt durch einen Katalysator reagiert das Methanol in dem Methanol-Wasser-Gemisch im Anodenbereich 11a zu Protonen, Kohlendioxid und Elektronen. Die Protonen wandern durch die protonendurchlässige Membran 11c, die beispielsweise aus Nafion gebildet sein kann, in den Kathodenbereich 11b und reagieren dort mit Sauerstoffionen aus der Umgebungsluft, die durch einen Katalysator ioninsiert worden sind. Als Abfallprodukt entsteht hierbei Wasserdampf, der zusammen mit dem unverbrauchten Teil der Luft an die Umgebung abgegeben wird.

Die bei der Reaktion entstehenden Elektronen werden vom Anodenbereich zum Kathodenbereich in Form von elektrischem Strom geführt.

Das im Anodenbereich entstandene Kohlendioxid wird zusammen mit dem Wasser aus dem Anodenbereich in die Filtereinrichtung 13 gespült. Dieser Prozeß wird, wie die Brennstoffzufuhr in die Brennstoffzellenvorrichtung durch die Pumpvorrichtung 14 unterstützt.

In der Filtereinrichtung 13 wird das Kohlendioxid zu Carbonat umgewandelt. In der dargestellten Ausführungsform wird ein Calziumdioxid-Filter verwendet, in dem das Kohlendioxid unter Bildung von Wasser zu Calziumcarbonat umgewandelt wird.

Alternativ zur Filtereinrichtung kann auch eine lonentauschereinrichtung, insbesondere eine alkalische lonentauschereinrichtung auf Kunstharzbasis, verwendet werden. Hierzu eignet sich beispielsweise eine Kunstharzmatrix, an der Hydroxidionen angelagert sind. In einer derartigen lonentauschereinrichtung wird das Kohlendioxid unter Bildung von Wasser in Calziumcarbonat umgewandelt, das sich an der Matrix anlagert.

Das bei d er F ilterung entstandene Wasser wird zusammen mit d em unverbrauchten Teil des Methanol-Wasser-Gemisches wieder in die Brennstoffbehältervorrichtung 12 geführt.

Im fortwährenden Betrieb wird somit das Methanol in dem Methanol-Wasser-Gemisch umgesetzt, wodurch sich die Konzentration des Methanols in dem Methanol-Wasser-Gemisch bis auf einen Wert verringert, bei dem die oben beschriebene Reaktion nicht mehr effizient durchgeführt werden kann. Durch die Entsorgung des bei der Reaktion entstandenen Kohlendioxids wird zum anderen die Filtereinrichtung zugesetzt. Zweckmäßigerweise werden demnach der zur Verfügung gestellte Brennstoff und die Filtereinrichtung so dimensioniert, daß das Erreichen des Konzentrationswerts und das Zusetzen der Filtereinrichtung zur gleichen Zeit eintreten.

Gemäß der Ausführungsform in Figur 1 sind die Brennstoffbehältervorrichtung 12 und die Filtereinrichtung 13 in Form eines Moduls ausgebildet, während die Brennstoffzellenvorrichtung, die Pumpvorrichtungen, die Ventilatorvorrichtung sowie die nicht näher bezeichneten Zu- und Abführkanäle verbraucherseitig vorgesehen sind. Dieses Modul kann, wie durch den Pfeil in Figur 1 angedeutet aus dem Verbraucher herausgezogen und wiederaufbereitet werden. Hierzu wird in die Brennstoffbehältervorrichtung Brennstoff gefüllt und die Filtereinrichtung oder die lonentauschereinrichtung wird auf chemischem oder physikalischem Weg in ihren ursprünglichen Zustand gebracht oder vollständig ausgetauscht.

In der dargestellten Ausführungsform sind für einen 10 stündigen Betrieb eines Verbrauchers mit 20 Watt etwa 5ml Methanol erforderlich. Bei einer Konzentration von 4 Vol.-% Methanol im Methanol-Wasser-Gemisch sind demnach etwa 125ml Brennstoffgemisch erforderlich.

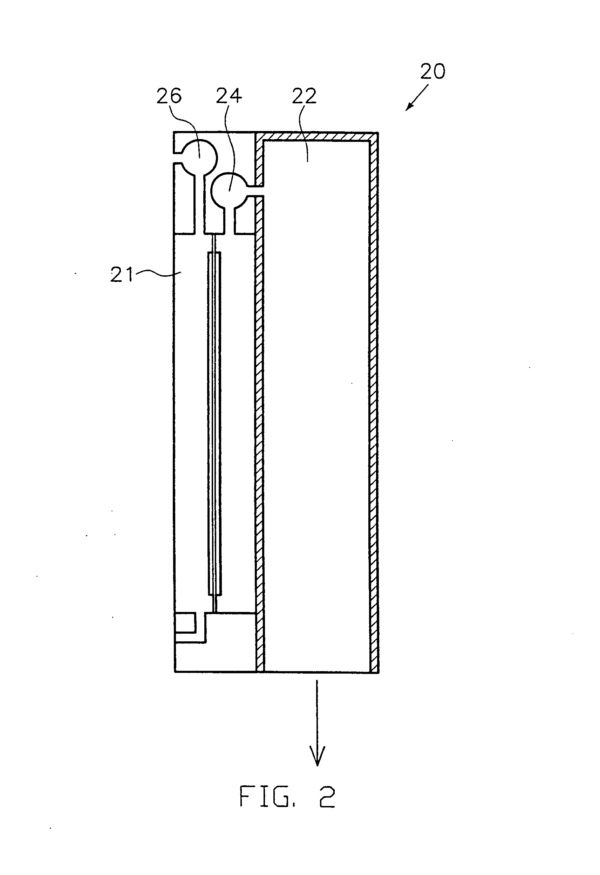

In Figur 2 ist eine zweite Ausführungsform eines erfindungsgemäßen Systems 20 zur Versorgung eines elektrischen Verbrauchers mit Energie dargestellt. Die Darstellung des Systems ist, insbesondere in bezug auf die dargestellten Größenverhältnisse, lediglich schematisch zu verstehen. Im folgenden wird zur Vermeidung von Wiederholungen nur auf die Unterschiede zu dem in Figur 1 dargestellten System eingegangen und bezüglich der übrigen Komponenten auf die entsprechende Beschreibung von Figur 1 verwiesen. Hierbei unterscheiden sich die Bezugszeichen, mit denen einander entsprechende Komponenten bezeichnet sind, jeweils durch die erste Ziffer.

Wesentlicher Unterschied zwischen dem System 20 und dem System 10 ist es, daß das System 20 für Brennstoffe vorgesehen ist, die vollständig verbrannt werden. Demnach entstehen in dem System 20 anodenseitig keine Abfallstoffe. Folglich besitzt der Anodenbereich 21b keinen Abfluß und keine Entsorgungsvorrichtung.

Die in Figur 2 dargestellte Brennstoffzellenvorrichtung kann in Form einer Wasserstoff-Brennstoffzellenvorrichtung realisiert werden. In einer derartigen Vorrichtung wird der Anode Wasserstoff zugeführt, der mittels eines Katalysators vollständig in Protonen umgesetzt wird. Diese Protonen gelangen durch die protonendurchlässige Membran in den Kathodenbereich. Im Kathodenbereich wird, ebenfalls mittels eines Katalysators, Sauerstoff aus der Umgebungsluft in Sauerstoffionen umgesetzt. Die Sauerstoffionen reagieren schließlich mit den Protonen zu Wasserdampf. Die bei diesen Reaktionen entstehenden Elektronen werden als Strom abgeführt.

Das aus dem System entfernbare Modul wird in der in Figur 2 dargestellten Ausführung durch die Brennstoffbehältervorrichtung 22 gebildet.

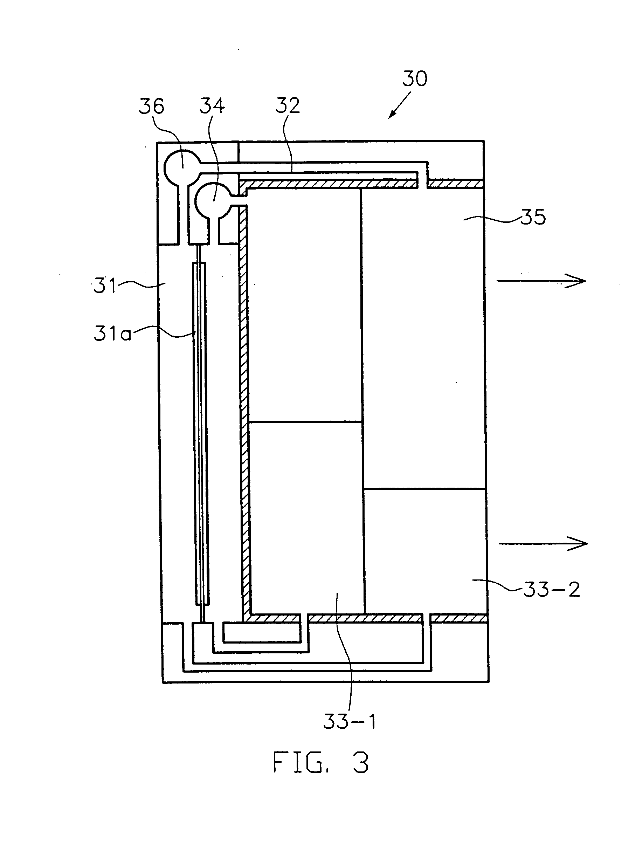

In Figur 3 ist eine dritte Ausführungsform eines erfindungsgemäßen Systems 30 zur Versorgung eines elektrischen Verbrauchers mit Energie dargestellt. Die Darstellung des Systems ist, insbesondere in bezug auf die dargestellten Größenverhältnisse, lediglich schematisch zu verstehen. Das System 30 ist dem in Figur 1 dargestellten System 10 ähnlich. Deshalb wird im folgenden zur Vermeidung von Wiederholungen nur auf die Unterschiede zu dem in Figur 1 dargestellten System eingegangen und bezüglich der übrigen Komponenten auf die entsprechende Beschreibung von Figur 1 verwiesen. Hierbei unterscheiden sich die Bezugszeichen, mit denen einander entsprechende Komponenten bezeichnet sind, jeweils durch die erste Ziffer.

Das System gemäß Figur 3 unterscheidet sich von dem System nach Figur 1 dadurch, daß das Oxidationsmittel nicht aus der Umgebungsluft entnommen wird und daß die Abfallprodukte auf der Kathodenseite nicht an die Umgebung abgegeben werden. Demnach eignet sich dieses System insbesondere für Brennstoffe, deren Umsetzung umweltbelastende Abfallstoffe nach sich zieht.

Das Oxidationsmittel wird in einer Oxidationsmittelbehältervorrichtung 35 zur Verfügung gestellt. Von dort gelangt es über eine Pumpvorrichtung 36 in den Kathodenbereich 31a der Brennstoffzellenvorrichtung 31. Die Abfallprodukte dieses Prozesses werden über eine Abführleitung in die Entsorgungseinrichtung 33 geführt. Die Entsorgungsvorrichtung 33 umfaßt eine lonenaustauschereinrichtung 33-1 und eine Aufnahmeeinrichtung 33-2.

Die Pumpvorrichtung 36 ist in dieser Ausführungsform regelbar ausgebildet, und zwar so daß die der Brennstoffzellenvorrichtung zugeführte Brennstoffmenge eine konstante Ausgangsleistung der Brennstoffzellenvorrichtung 31 bewirkt. Als Regelgröße wird die von der Brennstoffzellenvorrichtung 31 abgegebene Leistung verwendet. Hierbei werden durch ein Meßeinrichtung ( nicht gezeigt) fortwährend Messungen d er A usgangsleistung d er B rennstoffzellenvorrichtung durchgeführt und in Abhängigkeit von der gemessenen Leistung die Pumprate erhöht oder erniedrigt.

Als Beispiel für eine derartige Brennstoffzellenvorrichtung kann wiederum eine Methanol-Brennstoffzellenvorrichtung herangezogen werden.

Als Oxidationsmittel wird hierbei mittels einer Pumpvorrichtung 36, die in Form einer Mikropumpe ausgebildet ist, reiner Sauerstoff aus der Oxidationsmittelbehältervorrichtung 35 in den Kathodenbereich zugeführt. Demnach entsteht kathodenseitig lediglich Wasserdampf als Abfallprodukt. Der entstandene Wasserdampf wird über eine Leitung in die Aufnahmeeinrichtung 33-2 geführt und dort gesammelt. Anodenseitig entsteht in dem System 30 Kohlendioxid als Abfallprodukt, das in einer lonenaustauschereinrichtung 33-1, wie oben beschrieben, unter Bildung von Wasser zu Calziumcarbonat umgewandelt wird. Das hierbei entstehende Wasser wird schließlich in die Brennstoffbehältervorrichtung 32 geführt.

Vorteil des System 30 gegenüber dem System 10 ist es, daß keine Abfallstoffe an die Umwelt abgegeben werden und daß durch Verwendung von reinem Sauerstoff eine effizientere Energieerzeugung stattfinden kann.

Das aus dem System entfernbare Modul wird in der in Figur 3 dargestellten Ausführung durch die Brennstoffbehältervorrichtung 32, die lonenaustauschereinrichtung 33-1, die Aufnahmeeinrichtung 33-2 und die Oxidationsmittelbehältervorrichtung 35 gebildet.

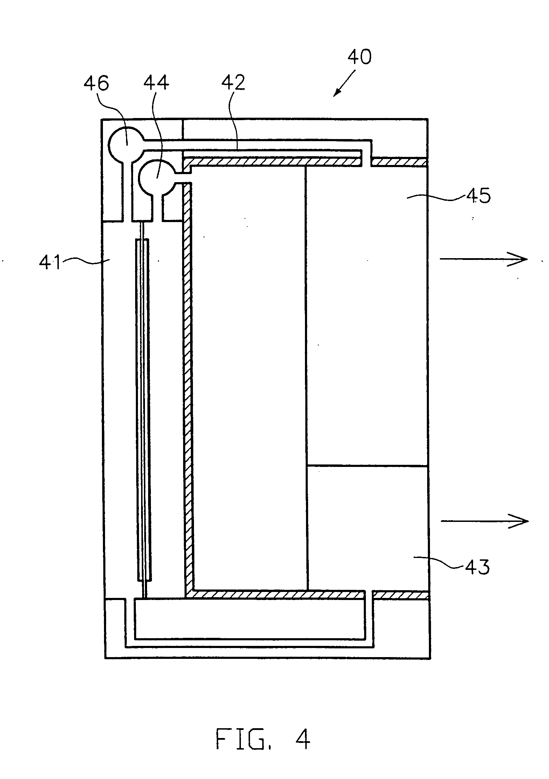

In Figur 4 ist eine vierte Ausführungsform eines erfindungsgemäßen Systems 40 zur Versorgung eines elektrischen Verbrauchers mit Energie dargestellt. Die Darstellung des Systems ist, insbesondere in bezug auf die dargestellten Größenverhältnisse, lediglich schematisch zu verstehen. Das System 40 ist den in Figur 2 und in Figur 3 dargestellten Systemen 20 und 30 ähnlich. Deshalb wird im folgenden zur Vermeidung von Wiederholungen nur auf die Unterschiede zu den in Figur 2 und in Figur 3 dargestellten Systemen eingegangen und bezüglich der übrigen Komponenten auf die entsprechende Beschreibung von Figur 2 und Figur 3 verwiesen. Hierbei unterscheiden sich die Bezugszeichen, mit denen einander entsprechende Komponenten bezeichnet sind, jeweils durch die erste Ziffer.

Das System 40 wird, wie das System 20 in Figur 2, mit einem Brennstoff betrieben, der anodenseitig vollständig umgesetzt wird. Demnach entstehen anodenseitig keine Abfallstoffe, und als Folge hiervon sind anodenseitig weder ein Abfluß noch eine Entsorgungsvorrichtung vorgesehen. Im übrigen liegen keine Unterschiede zwischen dem System 30 und 40 vor.

Zum Betrieb des Systems 40 eignet sich, analog zum Betrieb des Systems 20 in Figur 2, insbesondere Wasserstoff. Der Wasserstoff wird anodenseitg ohne Abfallprodukte in Protonen umgesetzt. Diese Protonen wandern durch die Elektrolyteinrichtung und reagieren auf der Kathodenseite, der aus der Oxidationsmittelbehältervorrichtung 45 reiner Sauerstoff zugeführt wird, mit katalysierten Sauerstoffionen zu Wasserdampf. Dieser Wasserdampf kann über eine Kondensatoreinrichtung zu Wasser kondensiert werden und dann in der Aufnahmeeinrichtung 43 gesammelt werden.

Das aus dem System entfernbare Modul wird in der in Figur 4 dargestellten Ausführung durch die Brennstoffbehältervorrichtung 42, die Aufnahmeeinrichtung 43 und die Oxidationsmittelbehältervorrichtung 45 gebildet.

Die dargestellten Ausführungsformen der Systeme sind lediglich beispielhaft und nicht beschränkend zu verstehen. Beispielsweise können eine Vielzahl von Brennstoffen, gasförmig oder flüssig, sowie eine Vielzahl von Oxidationsmitteln, ebenfalls gasförmig oder flüssig eingesetzt werden.

Voraussetzung ist lediglich, daß der betreffende Brennstoff über eine Katalysatoreinrichtung in Ionen zerlegt werden kann, die durch die Elektrolyteinrichtung wandern können, und auf der Kathodenseite mit Ionen reagieren, die aus einer Umsetzung eines Oxidationsmittels in Ionen resultieren.

In den in den Figuren 1 bis 4 dargestellten Ausführungsformen wurden protonendurchlässige Elektrolyten verwendet. In Abhängigkeit von dem verwendeten Brennstoff lassen sich allerdings auch andere Elektrolyteinrichtungen, die für positive oder negative Ionen durchlässig sind, verwenden.

Es bleibt anzumerken, daß der Brennstoff bei Verwendung von Elektrolyteinrichtungen, die für negative Ionen durchlässig sind, der Kathode zuzuführen ist. Bei einem Brennstoff, der vollständig umgesetzt wird, fallen demnach alle Abfallprodukte anodenseitig an.

Im übrigen lassen sich alle dem Fachmann auf dem Gebiet der Brennstoffzellen bekannten Ausführungen der Anodeneinrichtungen, der Kathodeneinrichtungen, der Elektrolyteinrichtungen, der Katalysatoren, und sonstiger Materialien für die Brennstoffzellenvorrichtungen in dem oben beschriebenen Ausführungen einsetzen.

Im folgenden werden Ausführungen von erfindungsgemäßen Brennstoffzellenvorrichtungen erläutert. Diese Brennstoffzellenvorrichtungen eignen sich insbesondere für die oben dargestellten Systeme, können allerdings auch universell eingesetzt werden.

In Figur 5 ist eine erste Ausführungsform einer Brennstoffzellenvorrichtung gemäß der vorliegenden Erfindung schematisch in Schnittansicht dargestellt. Die Darstellung der Brennstoffzellenvorrichtung ist, insbesondere in bezug auf die dargestellten Größenverhältnisse, lediglich schematisch zu verstehen.

Insbesondere zeigt Figur 5 eine Brennstoffzelleneinrichtung 50 zur Verwendung in einer erfindungsgemäßen Brennstoffzellenvorrichtung.

Die Brennstoffzelleneinrichtung 50 umfaßt eine Elektrolyteinrichtung 55 in Form einer ionenleitenden Membran, auf der drei Anodeneinrichtungen 51 und drei Kathodeneinrichtungen 52 vorgesehen sind.

Die Anodeneinrichtungen 51 und die Kathodeneinrichtungen 52 können hierbei durch Verfahren wie sie im Gebiet der Brennstoffzellentechnik bekannt sind mit der Membran verbunden werden. Alternativ können die Anodeneinrichtungen 51 und die Kathodeneinrichtungen 52 auch mit aus der Halbleitertechnik bekannten Verfahren, durch galvanische Verfahren oder andere Oberflächenbeschichtungsverfahren auf die Membran 55 aufgebracht werden.

In der Anordnung ist jeweils einer Anodeneinrichtung 51 eine Kathodeneinrichtung 52 zugeordnet. Die Anodeneinrichtungen 51 und die Kathodeneinrichtungen 52 weisen dieselbe Form und Größe auf. Hierdurch wird von jeder Anoden/Kathodeneinrichtung dieselbe Spannung und der selbe Strom geliefert. Die Anodeneinrichtungen 51 und die Kathodeneinrichtungen 52 können auch verschiedene Größen und Formen aufweisen; dies führt allerdings zum einen dazu, daß die einzelnen Einrichtungen keinen definierten Strom mehr abgeben, und zum anderen, daß bei vorgegebener Baugröße, gegenüber gleicher Form und Größe, die Stromausbeute verringert ist.

Weiterhin sind auf die Membran 55 Leiterbahnen 54 aufgebracht, die zur Verschaltung der Anodeneinrichtungen 51 und d er Kathodeneinrichtungen 52 dienen. D ies kann b eispielsweise durch aus der Halbleitertechnologie bekannte Verfahren, durch galvanische Verfahren oder andere Oberflächenbeschichtungsverfahren erfolgen.

In Figur 5 sind insbesondere ein an den Rand der Membran 55 geführter Anodeneinrichtungsanschluß 56a und ein Kathodeneinrichtungsanschluß 56b gezeigt.

Außerdem sind in der dargestellten Ausführungsform die drei einzelnen Zellen in Reihe geschaltet. Dies wird durch zwei Leiterbahnen 56c, die jeweils von der Anodenseite zur Kathodenseite durch die Membran geführt werden, realisiert. Zur Ausbildung derartiger Leiterbahnen können ebenfalls aus der Halbleitertechnologie bekannte Verfahren eingesetzt werden.

Weiterhin umfaßt die in Figur 5 dargestellte Ausführungsform Stromableiter 56d, die jeweils zwischen der Elektrolyteinrichtung und den Anodeneinrichtungen 51 bzw. den Kathodeneinrichtungen 52 vorgesehen sind. Die Stromableiter weisen zur Sicherstellung des lonentransports durch die Elektrolyteinrichtung Öffnungen auf. Die Stromableiter 56d bestehen zur Erhöhung der Lebensdauer derselben aus einem inerten Material, wie beispielsweise Nickel, Gold, Platin, Edelstahl oder Legierungen derselben.

Die gesamte Leiterbahn/Stromableiterstruktur kann in der in Figur 5 dargestellten Ausführungsform in einem einzigen Schritt, beispielsweise mit aus der Halbleitertechnologie bekannten Verfahren, wie Maskieren, Photolithographie, Ätzen, Beschichten und dergleichen, ausgebildet werden. Alternativ können auch galvanische Beschichtungsverfahren oder andere Oberflächenbeschichtungsverfahren verwendet werden.

Die in Figur 5 dargestellte Brennstoffzelleneinrichtung umfaßt weiterhin eine Zuführeinrichtung für den Brennstoff und das Oxidationsmittel (nicht dargestellt). Der Brennstoff wird hierbei den Anodeneinrichtungen zugeführt; das Oxidationsmittel wird den Kathodeneinrichtungen zugeführt.

Es muß sichergestellt werden, daß sich Brennstoff und Oxidationsmittel nicht mischen, um die Betriebssicherheit und die Funktionsfähigkeit der Brennstoffzelle zu gewährleisten. Dies wird in der gezeigten Ausführungsform dadurch gewährleistet, daß die verwendete Membran 55 sowohl für den Brennstoff als auch für das Oxidationsmittel undurchlässig ist. Hierdurch ist es in bezug auf den Stand der Technik nicht mehr erforderlich, die einzelnen Zellen gegeneinander abzudichten. Vielmehr können der Brennstoff auf der einen Seite und das Oxidationsmittel auf der anderen Seite entlang der Membran geführt werden. Insbesondere bei Verwendung von Leiterbahnen 5 6c, die von der Anodenseite zur Kathodenseite geführt werden, ist deshalb auch darauf zu achten, daß durch die Durchführung keine Undichtigkeiten entstehen, welche die Funktion der Brennstoffzelleneinrichtungen beeinträchtigen.

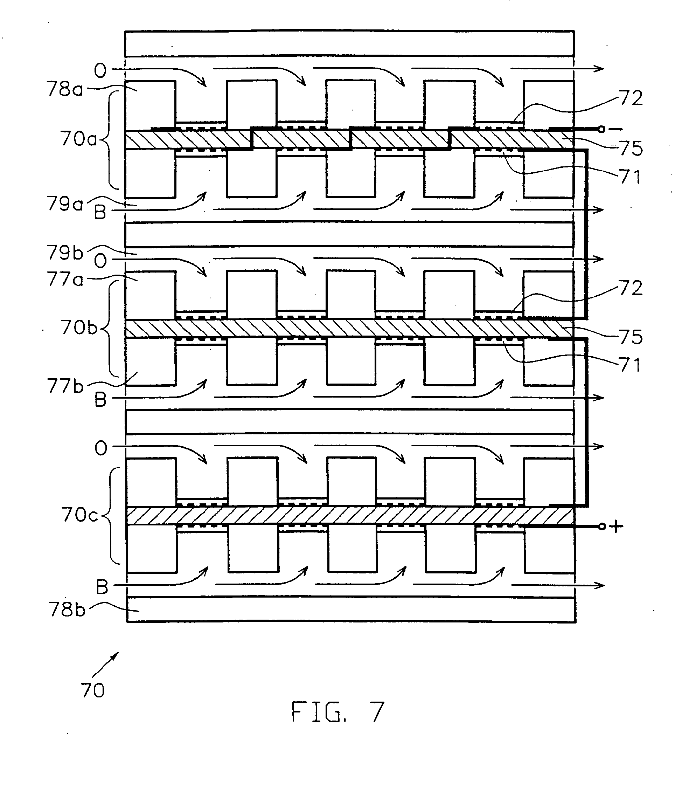

Wie bezugnehmend auf die Figuren 7 bis 9 noch im Detail erläutert wird, können mehrere der dargestellten Brennstoffzelleneinrichtungen zu einer Brennstoffzellenvorrichtung, die in diesem Fall als Brenstoffzellenstack bezeichnet wird, zusammengesetzt werden.

In Figur 6 ist eine zweite Ausführungsform einer Brennstoffzellenvorrichtung gemäß der vorliegenden E rfindung schematisch in Draufsicht d argestellt. Insbesondere zeigt F igur 6 eine Brennstoffzelleneinrichtung 60 zur Verwendung in einer erfindungsgemäßen Brennstoffzellenvorrichtung. Die Brennstoffzelleneinrichtung 60 ist der in Figur 5 dargestellten Brennstoffzelleneinrichtung 50 ähnlich. Deshalb wird im folgenden zur Vermeidung von Wiederholungen nur auf die Unterschiede zu der in Figur 5 dargestellten Brennstoffzelleneinrichtung eingegangen und bezüglich der übrigen Komponenten auf die entsprechende Beschreibung von Figur 5 verwiesen.

Die Brennstoffzelleneinrichtung 60 umfaßt neun Anodeneinrichtungen 61, die auf einer durchgehenden Membran 65 angeordnet sind. Weiterhin sind neun Kathodeneinrichtungen vorgesehen, die in der Zeichenebene jeweils unter den Anodeneinrichtungen 61 liegen. Ebenfalls unter den Anodeneinrichtungen 61 und somit in der Draufsicht nicht sichtbar sind Stromableitereinrichtungen in Form einer Lochstruktur auf der Elektrolyteinrichtung 65 vorgesehen.

Der wesentliche Unterschied zwischen den in Figur 5 und in Figur 6 dargestellten Ausführungsformen liegt in der Verschaltungseinrichtung. In der Brennstoffzelleneinrichtung 60 werden nur Leiterbahnen 66a und 66b verwendet, die an den Rand der Membran 65 geführt sind. Die neun Leiterbahnen 66a sind mit den Anodeneinrichtungen 61 verbunden. Die neun Leiterbahnen 66b (von denen lediglich drei gestrichelt dargestellt sind, da sie auf der Unterseite der Membran liegen) sind mit den Kathodeneinrichtungen verbunden.

Am Rand der Membran sind alle Leiterbahnen mit Verbindungseinrichtungen in Form von Kontaktstiften 67a und 67b verbunden.

Diese Kontaktstifte 67a und 67b sind so angeordnet, daß sie mit einer Steckleiste einer Schaltvorrichtung 69 in Eingriff gebracht werden können.

Die Schaltvorrichtung 69 ist so ausgebildet, daß die Anodeneinrichtungen 61 und die Kathodeneinrichtungen 62 auf verschiedene dem Fachmann bekannte Weise parallel (zur Addition der Ströme) und in Reihe (zur Addition der Spannungen) verschaltet werden können. Am Ausgang der Schaltvorrichtung 69 können somit eine Vielzahl verschiedener Spannungen U und Ströme I zur Verfügung gestellt werden.

Neben den in Figur 5 und Figur 6 dargestellten Verschaltungen können, je nach Einsatzzweck, beliebige Kombinationen der dargestellten Ausführungen implementiert werden.

Beispielsweise ist es möglich in Figur 6 jeweils eine Spalte der Membran/Eiektroneneinrichtungen in Reihe geschaltet miteinander fest zu verschalten und jeweils die Reihen durch die Schaltvorrichtung variabel zusammenzuschalten.

Im Zusammenhang mit den Ausführungsformen der Figuren 5 und 6 wird darauf hingewiesen, daß die Verwendung von Leiterbahnen lediglich beispielhaft und nicht beschränkend zu verstehen ist. Es lassen sich beliebige andere Verschaltungseinrichtungen einsetzen, beispielsweise können die Anodeneinrichtungen und die Kathodeneinrichtungen auch mit Drähten verschaltet werden.

In Figur 7 ist eine dritte Ausführungsform einer Brennstoffzellenvorrichtung gemäß der vorliegenden Erfindung schematisch dargestellt. Auch in dieser Figur sind die Größenverhältnisse aus Gründen einer verständlicheren Darstellung n icht realistisch dargestellt. Insbesondere zeigt Figur 7 eine Brennstoffzellenvorrichtung 70, die drei Brennstoffzelleneinrichtungen 70a, 70b und 70c, die der in Figur 5 und Figur 6 beschriebenen ähnlich sind, umfaßt.

Jede der Brennstoffzelleneinrichtungen 70a, 70b und 70c weist eine Mehrzahl von Anodeneinrichtungen 71 und eine Mehrzahl von Kathodeneinrichtungen 72 auf, die auf einer Membran 75 angeordnet sind. Wie in der Brennstoffzelleneinrichtung 70a angedeutet, sind die einzelnen Zellen der Brennstoffzelleneinrichtungen 70a, 70b und 70c miteinander durch Leiterbahnen in Reihe geschaltet, so daß eine Erhöhung der Spannung resultiert.

Die Brennstoffzelleneinrichtung 70a, 70b und 70c sind gemäß Figur 7 ihrerseits miteinander elektrisch in Reihe geschaltet.

In der Brennstoffzellenvorrichtung 70 sind die Brennstoffzelleneinrichtungen 70a und 70b, sowie 70b und 70c durch Verbindungsvorrichtungen 77a und 77b miteinander verbunden. Hierbei sind jeweils zwei Brennstoffzelleneinrichtungen 70a, 70b und 70c so angeordnet, daß die Anodenseiten der Einrichtungen 70a und 70b den Kathodenseiten der Einrichtungen 70b und 70c gegenüberliegen.

Die Verbindungsvorrichtungen 77a und 77b bestehen jeweils aus einem Isolatormaterial, so daß die Anodeneinrichtungen 71 und die Kathodeneinrichtungen 72 zweier einander be-nachbarter Brennstoffzelleneinrichtungen elektrisch voneinander isoliert sind.

Die Verbindungsvorrichtungen 77a und 77b umfassen jeweils eine Verteilungsstruktur 79a zur Zuführung des Brennstoffs B zu den Anodeneinrichtungen und eine Verteilungsstruktur 79b zur Zuführung des Oxidationsmittels O zu den Kathodeneinrichtungen. Die Verteilungsstruktur kann hierbei auf bekannte Art und Weise ausgebildet sein. Beispielsweise kann sie in Form einer Kanalstruktur oder einer porösen Struktur vorliegen. Weiterhin können Brennstoff und Oxidationsmittel parallel zueinander zugeführt werden (siehe Figur 7); es ist allerdings auch möglich Brennstoff und Oxidationsmittel über Kreuz zuzuführen. Die Zuführung des Brennstoffs B und des Oxidationsmittels O sind in Figur 7 durch Pfeile angedeutet.

An den Außenseiten der Brennstoffzelleneinrichtungen ist jeweils eine Abschlußplatte 78a und 78b vorgesehen. Wie aus Figur 7 ersichtlich weisen die Abschlußplatten nur jeweils eine Verteilungsstruktur auf.

Die in Figur 7 dargestellten Verteilungsstrukturen sind mit einer Brennstoffzufuhr und einer Oxidationsmittelzufuhr, wie sie beispielsweise im Zusammenhang mit den in den Figuren 1 bis 4 beschriebenen Ausführungsformen gezeigt sind, verbunden.

Gemäß Figur 7 sind die Leiterbahnen zur Verschaltung der Elektroden auf die Membran 75 aufgebracht. Alternativ können die Leiterbahnen auch auf die Verbindungsvorrichtungen 77a und 77b und/oder die Abschlußplatten 78a und 78b aufgebracht werden. Hierzu lassen sich die zuvor erwähnten Verfahren einsetzen.

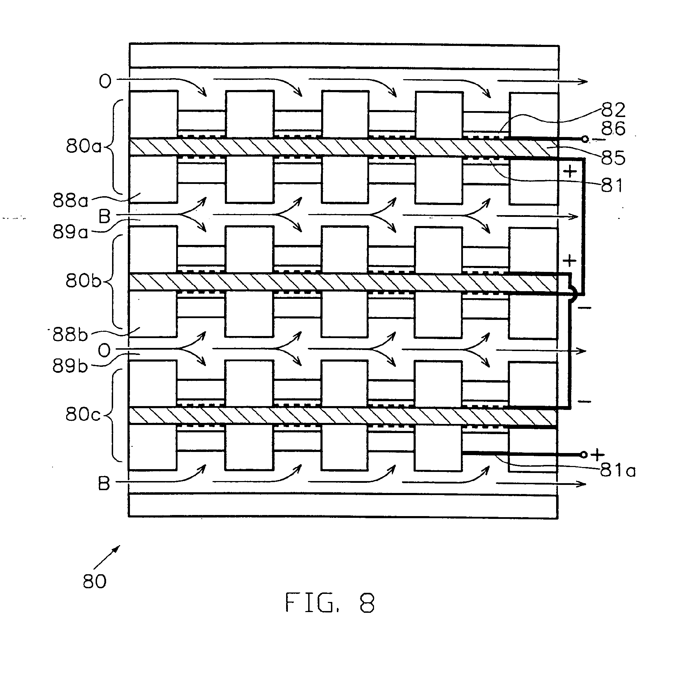

In Figur 8 ist eine vierte Ausführungsform einer Brennstoffzellenvorrichtung 80 gemäß der vorliegenden Erfindung schematisch im Schnitt dargestellt. Die Brennstoffzelleneinrichtung 80 ist der in Figur 7 dargestellten Brennstoffzelleneinrichtung 70 ähnlich. Deshalb wird im folgenden zur Vermeidung von Wiederholungen nur auf die Unterschiede zu der in Figur 7 dargestellten Brennstoffzelleneinrichtung 70 eingegangen und bezüglich der übrigen Komponenten auf die entsprechende Beschreibung von Figur 7 verwiesen.

Die Brennstoffzelleneinrichtungen 80a, 80b und 80c sind so angeordnet, daß sich jeweils die Kathodenseiten bzw. die Anodenseiten zweier benachbarter Brennstoffzelleneinrichtungen einander gegenüber liegen. Wie in der Ausführungsform in Figur 7 sind auch die Brennstoffzelleneinrichtungen 80a und 80b bzw. 80b und 80c durch Verbindungsvorrichtungen 88a und 88b miteinander verbunden.

Entsprechend der gezeigten Anordnung sind die Brennstoffzelleneinrichtungen 80a, 80b und 80c miteinander in Reihe geschaltet (wie in Figur 8 dargestellt).

Im Gegensatz zur Anordnung in Figur 7 ist es in der Anordnung 80 ausreichend, daß die Verbindungsvorrichtungen 88a und 88b nur jeweils eine Verteilungsstruktur zur Zuführung des Oxidationsmittels bzw. des Brennstoffs aufweisen.

Ein weiterer Unterschied zwischen den Brennstoffzellenvorrichtungen 70 und 80 besteht darin, daß in der Vorrichtung 80 brennstoff- bzw. oxdansmitteldurchlässige Stromableiter 83 in Form eines Geflechts oder eines Lochblechs auf den Anodeneinrichtungen 81 oder den Kathodeneinrichtungen 82 vorgesehen sind. Diese Stromableiter sind mit Leiterbahnen, die auf der Membran 85 oder auf der Verbindungsvorrichtung 88a bzw. 88b aufgebracht sind, verbunden. Alternativ können die Stromableiter zur Verschaltung der Elektroden auch mit Drähten verbunden sein. Sowohl die Leiterbahnen als auch die Drähte können durch die Verbindungsvorrichtung 88b geführt werden können. Dies ist beispielhaft in Figur 8 für den untersten Anodenanschluß 81a dargestellt.

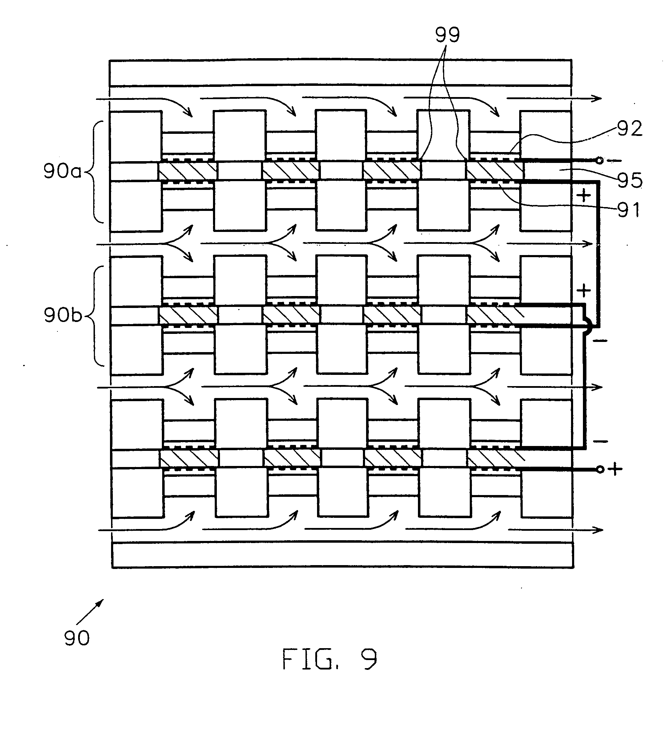

In Figur 9 ist eine fünfte Ausführungsform einer Brennstoffzellenvorrichtung 90 gemäß der vorliegenden Erfindung schematisch im Schnitt dargestellt. Die Brennstoffzelleneinrichtung 90 entspricht der in Figur 8 dargestellten Brennstoffzelleneinrichtung 80. Der einzige Unterschied zwischen beiden Vorrichtungen besteht darin, daß die Vorrichtung 90 eine der Anzahl der Anodeneinrichtungen 91 bzw. Kathodeneinrichtungen 92 entsprechende Anzahl an Elektrolyteinrichtungen 95 aufweist. Da in dieser Ausführungsform die Trennung zwischen Brennstoff und Oxidationsmittel durch eine durchgehende Membran entfällt, muß bei der Anordnung der Einzelzellen darauf geachtet werden, daß eine Trennung von Brennstoffund Oxidationsmittelseite einer Brennstoffzelleneinrichtung anderweitig gewährleistet ist. Hierzu sind in der in Figur 9 dargestellten Ausführungsform Dichtungseinrichtungen 99 vorgesehen.

Im übrigen wird, zur Vermeidung von Wiederholungen bezüglich der übrigen Komponenten auf die entsprechende Beschreibung von Figur 8 verwiesen.

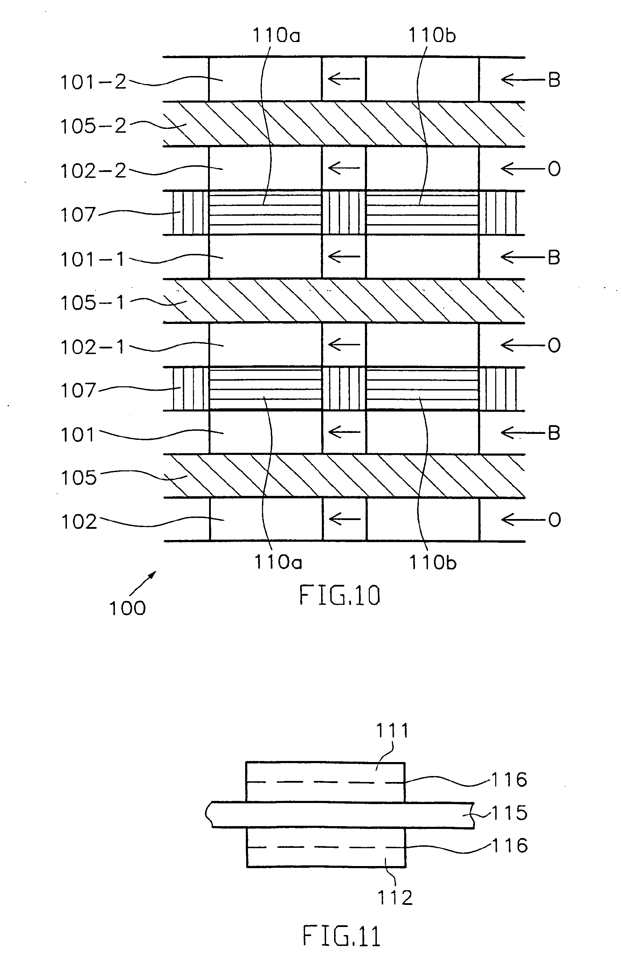

In Figur 10 ist eine sechste Ausführungsform einer Brennstoffzellenvorrichtung 100 gemäß der vorliegenden Erfindung schematisch im Schnitt dargestellt. Die Brennstoffzelleneinrichtung 100 entspricht der in Figur 7 dargestellten Brennstoffzelleneinrichtung 70. Sie umfaßt insbesondere drei Brennstoffzelleneinrichtungen, die jeweils aus Anodeneinrichtungen 101 (101-1, 101-2), Kathodeneinrichtungen 102 (102-1, 102-2), und einer Elektrolyteinrichtung 105 (105-1, 105-2) bestehen.

Der wichtigste Unterschied zwischen beiden Vorrichtungen besteht darin, daß die Verbindungsvorrichtung 107 leitende Elemente 110a und 110b aufweist. Demnach ist jede Verbindungsvorrichtung 107 in leitende Bereiche 110a und 110b (horizontal schraffiert in Figur 10) und nicht leitende Bereiche (vertikal schraffiert in Figur 10) aufgeteilt.

Die leitenden Elemente 110a und 110b sind hierbei so angeordnet sind, daß sie jede Anodeneinrichtung 101-1 einer ersten zweier zueinander benachbarten Brennstoffzelleneinrichtungen 101-1, 105-1, 102-1 mit der ihr zugewandten und ihr entsprechenden Kathodeneinrichtung 102-2 einer zweiten der zweier zueinander benachbarten Brennstoffzelleneinrichtungen 101-2, 105-2, 102-2 elektrisch leitend verbindet.

Hierdurch ist es möglich, verschiedene, jeweils übereinander liegende Zellen verschiedener Brennstoffzelleneinrichtungen stapelförmig miteinander zu verschalten. Hierdurch wird in jedem Stapel für übereinanderliegende Brennstoffzellen verschiedenen Brennstoffzelleneinrichtungen eine bipolare Verschaltung realisiert. Die verschiedenen auf diese Weise entstehenden Stapel brauchen nur noch jeweils an der untersten und der obersten Zelle der Stapel miteinander verschaltet werden. Dadurch kann der Verschaltungsaufwand in der Brennstoffzellenvorrichtung verringert werden.

Durch die oben beschriebene Anordnung ergibt sich weiterhin eine im Vergleich zu Figur 7 veränderte Verteilungsstruktur. Insbesondere werden in der in Figur 10 gezeigten Ausführungsform die Anodeneinrichtungen 101 und die Kathodeneinrichtungen 102 von dem Brennstoff bzw. dem Oxidationsmittel seitlich umströmt.

Im übrigen wird, zur Vermeidung von Wiederholungen bezüglich der übrigen Komponenten auf die entsprechende Beschreibung von Figur 7 verwiesen.

In Figur 11 ist eine alternative Ausführungsform eines Stromableiters gemäß der vorliegenden Erfindung im Schnitt dargestellt. Figur 11 zeigt eine Brennstoffzelle, die aus einer Anodeneinrichtung 111, einer Kathodeneinrichtung 112 und einer Elektrolyteinrichtung aufgebaut ist. Weiterhin ist in Figur 11 ein Stromableiter gezeigt, der in der Anodeneinrichtung 111 bzw. in der Kathodeneinrichtung 112 vorgesehen ist.

Der Stromableiter 116 besteht vorzugsweise a us einer Lochfolie, die einen Durchtritt der Ionen, sowie des Brennstoffs und des Oxidationsmittels sicherstellt. Bezüglich der zu verwendenden Material gilt das gleiche, das bereits mit den in Figur 5 und in Figur 8 beschriebenen Stromableitern ausgeführt worden ist.

Die im Zusammenhang mit den Figuren 1 bis 11 beschriebenen Ausführungsformen sind lediglich beispielhaft und nicht beschränkend zu verstehen.

Insbesondere sind die Anzahl der Brennstoffzelleneinrichtungen, die Anzahl der Zellen pro Brennstoffzelleneinrichtung, die durchgängige Membran bzw. die Einzelmembranen, die jeweils dargestellten Verschaltungen (einschließlich der Verwendung einer Schaltvorrichtung), die verschiedenen Verbindungsvorrichtungen (monopolare Platte, bipolare Platte), voneinander unabhängige Merkmale und können auf beliebige Weise miteinander kombiniert werden.

## Patentansprüche

1. Brennstoffzellenvorrichtung (50) umfassend wenigstens eine Brennstoffzelleneinrichtung mit
einer Mehrzahl von Anodeneinrichtungen (51), und
einer Mehrzahl von Kathodeneinrichtungen (52), wobei jeder Kathodeneinrichtung eine entsprechende Anodeneinrichtung zugeordnet ist,
**dadurch gekennzeichnet, daß**
jede Brennstoffzelleneinrichtung eine im wesentlichen flächige Elektrolyteinrichtung (55) aufweist, wobei jede Anodeneinrichtung (51) und die ihr entsprechende Kathodeneinrichtung (52) auf einander gegenüberliegenden Seiten der Elektrolyteinrichtung angeordnet sind.

2. Brennstoffzellenvorrichtung (90) umfassend wenigstens zwei Brennstoffzelleneinrichtungen (90a, 90b) mit jeweils
einer Mehrzahl von Anodeneinrichtungen (91),
einer Mehrzahl von Kathodeneinrichtungen (92), wobei jeder Kathodeneinrichtung eine entsprechende Anodeneinrichtung zugeordnet ist, und
einer Mehrzahl von Elektrolyteinrichtungen (95), wobei
jeweils eine Anodeneinrichtung (91) und eine entsprechende Kathodeneinrichtung (92) auf einander gegenüberliegenden Seiten einer entsprechenden Elektrolyteinrichtung (95) angeordnet sind und zusammen eine Einzelzelle bilden, und
alle Einzelzellen einer Brennstoffzelleneinrichtung in einer Ebene angeordnet sind.

3. Brennstoffzellenvorrichtung nach Anspruch 1 oder 2 in welcher jeweils einander entsprechende Anodeneinrichtungen (51) und Kathodeneinrichtungen (52) dieselbe Größe und dieselbe Form aufweisen.

4. Brennstoffzellenvorrichtung nach einem der Ansprüche 1 bis 3, in welcher zwischen der (den) Elektrolyteinrichtung(en) und den Anodeneinrichtungen und/oder zwischen der (den) Elektrolyteinrichtung(en) und den Kathodeneinrichtungen ionendurchlässige, vorzugsweise protonendurchlässige, Stromableiter (56d) vorgesehen sind, die durch eine Verschaltungseinrichtung miteinander verschaltet sind.

5. Brennstoffzellenvorrichtung nach einem der Ansprüche 1 bis 4, in welcher auf den Anodeneinrichtungen und/oder den Kathodeneinrichtungen brennstoffdurchlässige bzw. oxidationsmitteldurchlässige Stromableiter (86) vorgesehen sind, die durch eine Verschaltungseinrichtung miteinander verschaltet sind.

6. Brennstoffzellenvorrichtung nach einem der Ansprüche 1 bis 5, in welcher in den Anodeneinrichtungen und/oder in den Kathodeneinrichtungen brennstoffdurchlässige bzw. oxidationsmitteldurchlässige Stromableiter (116) vorgesehen sind, die durch eine Verschaltungseinrichtung miteinander verschaltet sind.

7. Brennstoffzellenvorrichtung nach einem der Ansprüche 4 bis 6, in welcher jeder Stromableiter (56d; 86; 116) ein Geflecht oder eine Lochfolie aufweist.

8. Brennstoffzellenvorrichtung nach einem der Ansprüche 4 bis 7, in welcher jeder Stromableiter Nickel, Gold, Platin und/oder Edelstahl umfaßt.

9. Brennstoffzellenvorrichtung nach einem der Ansprüche 4 bis 8, in welcher jeder Stromableiter (56d; 86; 116) ungefähr dieselbe Größe wie die ihm zugeordnete Anodeneinrichtung bzw. die ihm zugeordnete Kathodeneinrichtung aufweist.

10. Brennstoffzellenvorrichtung nach einem der Ansprüche 4 bis 9, in welcher die Verschaltungseinrichtung Leiterbahnen umfaßt.

11. Brennstoffzellenvorrichtung nach Anspruch 10, in welcher die Leiterbahnen (54) auf der Elektrolyteinrichtung aufgebracht sind.

12. Brennstoffzellenvorrichtung nach Anspruch 10 oder 11, in welcher die Verschaltungseinrichtung eine Leiterbahn für wenigstens eine Anodeneinrichtung (56a; 66a) und eine Leiterbahn für wenigstens eine Kathodeneinrichtung (56b; 66b) umfaßt, wobei die Leiterbahnen am Rand der Elektrolyteinrichtung mit einer Verbindungseinrichtung (67a; 67b) verbunden sind.

13. Brennstoffzellenvorrichtung nach einem der Ansprüche 10 bis 12, in welcher die Verschaltungseinrichtung für wenigstens eine Anodeneinrichtung und wenigstens eine Kathodeneinrichtung eine Leiterbahn (56c) umfaßt, die von der Anodenseite zur Kathodenseite durch die Elektrolyteinrichtung geführt ist.

14. Brennstoffzellenvorrichtung nach einem der Ansprüche 4 bis 13, mit einer Schaltvorrichtung (69), die zum Verändern der Verschaltungseinrichtung der Anodeneinrichtungen und der Kathodeneinrichtungen der wenigstens einen bzw. der wenigstens zwei Brennstoffzelleneinrichtungen ausgebildet ist, so daß eine optimale Anpassung (U, I) der durch die Brennstoffzellenvorrichtung erzeugten elektrischen Leistung an Erfordernisse eines Verbrauchers möglich ist.

15. Brennstoffzellenvorrichtung nach Anspruch 14 in Verbindung mit Anspruch 12, in welcher die Schaltvorrichtung (69) eine Verbindungseinrichtung aufweist, die mit der Verbindungseinrichtung am Rand der Elektrolyteinrichtung verbindbar ist.

16. Brennstoffzellenvorrichtung nach Anspruch 15, in welcher die Verbindungseinrichtung eine Steckleiste oder mehrere Steckleisten umfaßt.

17. Brennstoffzellenvorrichtung nach einem der Ansprüche 1 bis 16, in welcher die Elektrolyteinrichtung in Form einer protonenleitenden Elektrolytfolie vorgesehen ist.

18. Brennstoffzellenvorrichtung nach einem der Ansprüche 1 bis 17, in welcher die Brennstoffzelleneinrichtungen Methanol-Brennstoffzelleneinrichtungen sind, und die Elektrolyteinrichtung Nafion umfaßt.

19. Brennstoffzellenvorrichtung nach einem der Ansprüche 1 bis 17, in welcher die Brennstoffzelleneinrichtungen Wasserstoff-Brennstoffzelleneinrichtungen sind, und die Elektrolyteinrichtung Nafion umfaßt.

20. Brennstoffzellenvorrichtung nach einem der Ansprüche 1 bis 19, in welcher die Brennstoffzelleneinrichtungen durch Oberflächenbehandlungsverfahren, vorzugsweise halbleitertechnologische Verfahren und/oder galvanische Verfahren, hergestellt sind.

21. Brennstoffzellenvorrichtung (80; 90) nach einem der Ansprüche 1 bis 20 mit wenigstens zwei Brennstoffzelleneinrichtungen (80a, 80b, 80c), in welcher jeweils zwei zueinander benachbarte Brennstoffzelleneinrichtungen (80a, 80b bzw. 80b, 80c) durch eine elektrisch isolierende Verbindungsvorrichtung (88a bzw. 88b) miteinander verbunden sind, wobei
die jeweils zwei zueinander benachbarten Brennstoffzelleneinrichtungen (80a, 80b) so angeordnet sind, daß die Anodeneinrichtungen (81) der ersten dieser Brennstoffzelleneinrichtungen (80a) den Anodeneinrichtungen (81) der zweiten dieser Brennstoffzelleneinrichtungen (80b) zugewandt sind, und/oder die Kathodeneinrichtungen (82) der ersten dieser Brennstoffzelleneinrichtungen (80b) den Kathodeneinrichtungen (82) der zweiten dieser Brennstoffzelleneinrichtungen (80c) zugewandt sind, und
jede Verbindungsvorrichtung (88a bzw. 88b) eine Zuführverteilungsstruktur (89a bzw. 89b) für den den Anodeneinrichtungen zuzuführenden Brennstoff (B) bzw. das den Kathodeneinrichtungen zuzuführende Oxidationsmittel (O) aufweist.

22. Brennstoffzellenvorrichtung (70) nach einem der Ansprüche 1 bis 20 mit wenigstens zwei Brennstoffzelleneinrichtungen (70a, 70b), in welcher jeweils zwei zueinander benachbarte Brennstoffzelleneinrichtungen (70a, 70b) durch eine elektrisch isolierende Verbindungsvorrichtung (77a) miteinander verbunden sind, wobei
jeweils die Kathodenseite (72) einer ersten der zwei zueinander benachbarten Brennstoffzelleneinrichtungen (70b) der Anodeneinrichtung (71) der zweiten der zwei zueinander benachbarten Brennstoffzelleneinrichtungen (70a) zugewandt ist, und
jede Verbindungsvorrichtung (77a) eine erste Zuführverteilungsstruktur (79a) für den den Anodeneinrichtungen (71) zuzuführenden Brennstoff (B) und zweite Zuführverteilungsstruktur (79b) für das den Kathodeneinrichtungen (72) zuzuführende Oxidationsmittel (O) aufweist.

23. Brennstoffzellenvorrichtung nach Anspruch 22, in welcher die Verbindungsvorrichtung (107) leitende Elemente (110a; 110b) aufweist, die so angeordnet sind, daß sie jede Anodeneinrichtung (101) einer ersten der zwei zueinander benachbarten Brennstoffzelleneinrichtungen (100a) mit der ihr zugewandten Kathodeneinrichtung (102) der zweiten der zwei zueinander benachbarten Brennstoffzelleneinrichtungen (100b) elektrisch leitend verbindet.

24. Brennstoffzellenvorrichtung nach einem der Ansprüche 21 bis 23 in Verbindung mit Anspruch 10, in welcher die Leiterbahnen auf oder in der Verbindungsvorrichtung vorgesehen sind.

25. Brennstoffzellenvorrichtung nach Anspruch 24, in welcher die Verschaltungseinrichtung eine Leiterbahn für wenigstens eine Anodeneinrichtung und eine Leiterbahn für wenigstens eine Kathodeneinrichtung umfaßt, wobei die Leiterbahnen am Rand der Verbindungsvorrichtung mit einer Verbindungseinrichtung verbunden sind.

26. Brennstoffzellenvorrichtung nach einem der Ansprüche 21 bis 25 mit einem Gehäuse, in dem die Brennstoffzellenvorrichtung untergebracht ist, in welcher sich die Verbindungseinrichtung durch eine Wand des Gehäuses erstreckt.

27. Brennstoffzellenvorrichtung nach einem der Ansprüche 1 bis 26, die als Niedertemperatur-Brennstoffzellenvorrichtung ausgebildet ist.

28. Brennstoffzellenvorrichtung nach einem der Ansprüche 1 bis 27, die zur Abgabe einer Leistung von weniger als einem kW ausgebildet ist.

29. System (10; 30; 40) zur Versorgung eines Verbrauchers mit elektrischer Energie, umfassend:
eine Brennstoffzellenvorrichtung (11; 31; 41) nach einem der Ansprüche 1 bis 28 zur Erzeugung der elektrischen Energie,
eine Brennstoffbehältervorrichtung (12; 32; 42) zur Aufnahme von der Brennstoffzellenvorrichtung zuführbarem Brennstoff,
eine Entsorgungsvorrichtung (13; 33-1, 33-2; 43) zur Entsorgung der durch den Betrieb der Brennstoffzellenvorrichtung entstehenden Abfallprodukte.

30. System nach Anspruch 29, in welchem die Entsorgungsvorrichtung (33-2; 43) eine Aufnahmeeinrichtung zur Aufnahme der Abfallprodukte aufweist.

31. System nach Anspruch 30, in welchem die Brennstoffbehältervorrichtung (12; 32) so ausgebildet ist, daß sie als Aufnahmeeinrichtung dient.

32. System nach einem der Ansprüche 29 bis 31, in welchem die Entsorgungseinrichtung (13) eine Filtereinrichtung aufweist.

33. System nach einem der Ansprüche 29 bis 31, in welchem die Entsorgungseinrichtung (33-1) eine lonentauschereinrichtung aufweist.

34. System nach Anspruch 32 oder 33, in welchem die Entsorgungseinrichtung (13; 33-1) zur Umwandlung von beim Betrieb der Brennstoffzellenvorrichtung entstehender Gase in flüssige und/oder feste Stoffe ausgebildet ist.

35. System nach einem der Ansprüche 29 bis 34 mit einer Pumpvorrichtung (14; 34; 44), vorzugsweise einer Miniaturpumpe, zur Unterstützung der Brennstoffzufuhr aus der Brennstoffbehältervorrichtung (12; 32; 42) in die Brennstoffzellenvorrichtung (11; 31; 41).

36. System nach Anspruch 35, in welchem die Brennstoffzufuhr im wesentlichen durch die Pumpvorrichtung (14; 34; 44) bewirkt wird.

37. System nach Anspruch 35 oder 36, in welchem die Pumpvorrichtung (14; 34; 44) derart regelbar ist, daß die von der Pumpvorrichtung (14; 34; 44) der Brennstoffzellenvorrichtung (11; 31; 41) zugeführte Brennstoffmenge eine konstante Ausgangsleistung der Brennstoffzellenvorrichtung (11; 31; 41) bewirkt, wobei die Ausgangsleistung der Brennstoffzellenvorrichtung als Regelgröße dient.

38. System nach einem der Ansprüche 29 bis 37, in welchem die Brennstoffzellenvorrichtung (11; 31) als Methanol-Brennstoffzellenvorrichtung ausgebildet ist.

39. System nach Anspruch 38 in Verbindung mit Anspruch 32, in welchem die Filtereinrichtung (13) zur Umwandlung von Kohlendioxid in ein Carbonat vorgesehen ist.

40. System nach Anspruch 38 in Verbindung mit Anspruch 33, in welchem die lonentauschereinrichtung (33-1) einen alkalischen lonentauscher, vorzugsweise einen Hydroxidionentauscher, auf Kunstharzbasis aufweist.

41. System nach einem der Ansprüche 29 bis 37, in welchem die Brennstoffzellenvorrichtung (41) als Wasserstoff-Brennstoffzellenvorrichtung ausgebildet ist.

42. System nach einem der Ansprüche 38 bis 41, in welchem die Brennstoffbehältervorrichtung zur Aufnahme von Methanol-Wasser-Gemisch (32) bzw. Wasserstoff (42) ausgebildet ist, und eine Oxidationsmittelbehältervorrichtung zur Aufnahme eines Oxidationsmittels (35; 45), vorzugsweise Sauerstoff oder Wasserstoffperoxid, vorgesehen ist.

43. System nach einem der Ansprüche 29 bis 42 mit einer Pumpvorrichtung (16; 36; 46), vorzugsweise einer Miniaturpumpe, zur Unterstützung der Oxidationsmittelzufuhr in die Brennstoffzellenvorrichtung (11; 31; 41).

44. System nach Anspruch 43, in welchem die Oxidationsmittelzufuhr im wesentlichen durch die Pumpvorrichtung bewirkt wird.

45. System nach Anspruch 43 oder 44, in welchem die Pumpvorrichtung (16; 36; 46) derart regelbar ist, daß die von der Pumpvorrichtung (16; 36; 46) der Brennstoffzellenvorrichtung (11; 31; 41) zugeführte Oxidationsmittelmenge eine konstante Ausgangsleistung der Brennstoffzellenvorrichtung (11; 31; 41) bewirkt, wobei die Ausgangsleistung der Brennstoffzellenvorrichtung als Regelgröße dient.

46. System nach einem der Ansprüche 43 bis 45 in Verbindung mit einem der Ansprüche 38 bis 41, in welchem die Pumpvorrichtung (16) in Form einer Ventilatoreinrichtung zur Zufuhr von Luftsauerstoff aus der Umgebung ausgebildet ist.

47. System nach einem der Ansprüche 29 bis 46, in welchem die Brennstoffzellenvorrichtung, die Brennstoffbehältervorrichtung, gegebenenfalls die Pumpvorrichtung für den Brennstoff und/oder für das Oxidationsmittel, gegebenenfalls die Behältervorrichtung zur Aufnahme des Oxidationsmittels und die Entsorgungsvorrichtung als Modul ausgebildet sind, das in den Verbraucher zur Energieversorgung einsetzbar und aus dem Verbraucher entfernbar ist.

48. System nach einem der Ansprüche 29 bis 46, in welchem die Brennstoffzellenvorrichtung und gegebenenfalls die Pumpvorrichtung für den Brennstoff und/oder für das Oxidationsmittel verbraucherseitig angeordnet ist bzw. sind, und die Brennstoffbehältervorrichtung, gegebenenfalls die Behältervorrichtung zur Aufnahme des Oxidationsmittels und die Entsorgungsvorrichtung als Modul ausgebildet sind, das in den Verbraucher zur Energieversorgung einsetzbar und aus dem Verbraucher entfernbar ist.
